(19) Europäisches Patentamt
European Patent Office
Office européen des brevets

(11) EP 2 317 855 B1

(12) # EUROPÄISCHE PATENTSCHRIFT

(45) Veröffentlichungstag und Bekanntmachung des Hinweises auf die Patenterteilung:
**04.01.2012 Patentblatt 2012/01**

(21) Anmeldenummer: **09777760.1**

(22) Anmeldetag: **08.08.2009**

(51) Int Cl.:
***A01N 43/66** (2006.01)* ***A01N 37/18** (2006.01)*
***A01N 37/22** (2006.01)* ***A01N 37/26** (2006.01)*
***A01N 43/40** (2006.01)* ***A01N 43/78** (2006.01)*
***A01N 43/90** (2006.01)* ***A01N 47/16** (2006.01)*
***A01N 47/36** (2006.01)* ***A01N 47/38** (2006.01)*
***A01P 13/00** (2006.01)*

(86) Internationale Anmeldenummer:
**PCT/EP2009/005768**

(87) Internationale Veröffentlichungsnummer:
**WO 2010/017930 (18.02.2010 Gazette 2010/07)**

(54) **HERBIZID-KOMBINATION MIT DIMETHOXY-TRIAZINYL-SUBSTITUIERTEN DIFLUORMETHAN-SULFONYLANILIDEN**

HERBICIDAL COMBINATION COMPRISING DIMETHOXY-TRIAZINYL-SUBSTITUTED DIFLUOROMETHANE SULFONYLANILIDES

COMBINAISON D'HERBICIDES CONTENANT DES DIFLUOROMETHANE SULFONYLANILIDES A SUBSTITUTION DIMETHOXY-TRIAZINYLE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **14.08.2008 DE 102008037620**

(43) Veröffentlichungstag der Anmeldung:
**11.05.2011 Patentblatt 2011/19**

(73) Patentinhaber: **BAYER CROPSCIENCE AG
40789 Monheim (DE)**

(72) Erfinder:
- **HACKER, Erwin
65239 Hochheim (DE)**
- **WALDRAFF, Christian
61118 Bad Vilbel (DE)**
- **ROSINGER, Christopher, Hugh
65719 Hofheim (DE)**
- **UENO, Chieko
60323 Frankfurt (DE)**
- **BONFIG-PICARD, Georg
63517 Rodenbach (DE)**
- **SCHNATTERER, Stefan
65795 Hattersheim (DE)**
- **SHIRAKURA, Shinichi
40597 Düsseldorf-Benrath (DE)**

(56) Entgegenhaltungen:
**EP-A1- 1 776 863** **WO-A2-2007/079965**
**WO-A2-2008/101595** **DE-A1- 19 521 355**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 317 855 B1

## Beschreibung

Die vorliegende Erfindung liegt auf dem technischen Gebiet der Pflanzenschutzmittel, die gegen unerwünschten Pflanzenwuchs, beispielsweise (z.B.) im Vorsaatverfahren (mit oder ohne Einarbeitung), im Vorauflauf oder im Nachauflauf in gesäten und/oder gepflanzten Kulturpflanzen wie beispielsweise in Weizen (Hart- und Weichweizen), Mais, Soja, Zuckerrübe, Zuckerrohr, Baumwolle, Reis (gepflanzt oder gesät unter 'Upland'- oder 'Paddy'-Bedingungen mit Indica- und/oder Japonica-Arten sowie Hybriden/Mutanten/GMOs), Bohnen (wie beispielsweise Buschbohne und Pferdebohne), Flachs, Gerste, Hafer, Roggen, Triticale, Raps, Kartoffel, Hirse (Sorghum), Weidegras, Grün-/Rasenflächen, in Obstanbauanlagen (Plantagenkulturen) oder auf Nicht-Kulturflächen (z.B. Plätzen von Wohn- und Industrieanlagen, Gleisanlagen) eingesetzt werden können. Neben der einmaligen Anwendung sind auch Sequenz-Anwendungen möglich.

Sie betrifft eine Herbizid-Kombination, enthaltend mindestens zwei Herbizide und deren Anwendung zur Bekämpfung unerwünschten Pflanzenwuchses, insbesondere eine Herbizid-Kombination enthaltend *N*-{2-[4,6-Dimethoxy-(1,3,5)triazin-2(-carbonyl oder -hydroxy-methyl)]-6-halogen-phenyl}-difluormethansulfonamide oder deren *N*-methyl-Derivate und/oder deren Salze, im Folgenden auch als "Dimethoxytriazinylsubstituierte Difluormethansulfonylanilide" bezeichnet, und herbizide Wirkstoffe aus der Gruppe der (Sulfon)Amide.

Es ist bekannt, dass cyclisch-substituierte Sulfonamide herbizide Eigenschaften aufweisen (z.B. WO 93/09099 A2, WO 96/41799 A1). Hierzu gehören auch die Phenyldifluormethansulfonamide, die auch als Difluormethansulfonylanilide bezeichnet werden. Bei den zuletzt genannten handelt es sich z.B. um Phenylderivate, die einfach oder mehrfach substituiert sind, u.a. mit Dimethoxypyimidinyl (z.B. WO 00/006553 A1) oder Dimethoxytriazinyl sowie einer weiteren Halogensubstitution (z.B. WO 2005/096818 A1, WO 2007/031208 A2).

Spezifische Verbindungen aus Gruppe der *N*-{2-[4,6-Dimethoxy-(1,3,5)triazin-2(-carbonyl oder -hydroxy-methyl)]-6-halogen-phenyl}-difluormethansulfonamide, wie in WO 2005/096818 A1 beschrieben, und deren N-methyl-Derivate , wie in WO 2006/008159 A1 im Zusammenhang mit Fungiziden erstmalig und in WO 2007/031208 A2 und JP 2007-213330 (unveröffentlicht) als Herbizide beschrieben, sind in ihren herbiziden Eigenschaften jedoch nicht in allen Belangen völlig zufriedenstellend.

Die herbizide Wirksamkeit der Dimethoxytriazinyl-substituierten Difluormethansulfonylanilide gegen Schadpflanzen (Unkräuter, Ungräser, Cyperaceen; im Folgenden auch zusammenfassend als "Unkraut" bezeichnet) liegt bereits auf einem hohen Niveau, hängt jedoch im Allgemeinen von der Aufwandmenge, der jeweiligen Zubereitungsform, den jeweils zu bekämpfenden Schadpflanzen oder dem Schadpflanzenspektrum, den Klima- und Bodenverhältnissen, etc. ab. Weitere Kriterien in diesem Zusammenhang sind die Dauer der Wirkung bzw. die Abbaugeschwindigkeit des Herbizids, die allgemeine Kulturpflanzenverträglichkeit und Wirkungsgeschwindigkeit (schnellere Wirksamkeit), das Wirkungsspektrum und Verhalten gegenüber Folgekulturen (Nachbauprobleme) oder die allgemeine Anwendungsflexibilität (Bekämpfung von Unkräutern in ihren verschiedenen Wachstumsstadien). Zu berücksichtigen sind gegebenenfalls auch Veränderungen in der Empfindlichkeit von Schadpflanzen, die bei längerer Anwendung der Herbizide oder geographisch begrenzt auftreten können (Bekämpfung toleranter oder resistenter Unkrautarten). Wirkungsverluste bei einzelnen Pflanzen lassen sich nur bedingt durch höhere Aufwandmengen der Herbizide ausgleichen, z.B. weil damit die Selektivität der Herbizide reduziert wird oder eine Wirkungsverbesserung auch bei höherer Aufwandmenge nicht eintritt.

So besteht oft Bedarf an gezielt synergistischer Aktivität gegenüber speziellen Unkrautarten, einer Unkrautbekämpfung mit insgesamt besserer Selektivität, einem allgemein geringeren Wirkstoffeinsatz für einen gleich guten Bekämpfungserfolg und für einen geringeren Wirkstoffeintrag in die Umwelt, um beispielsweise "Leaching"- und "Carry-over"-Effekte zu vermeiden. Ebenso besteht auch Bedarf an der Entwicklung von "One shot"-Applikationen, um arbeitsaufwändige Mehrfachapplikationen zu vermeiden, ebenso wie an der Entwicklung von Systemen zur Steuerung der Wirkungsgeschwindigkeit, wobei neben einer ersten, schnellen Unkrautkontrolle auch eine langsame, residual wirkende Bekämpfung eingestellt wird.

Eine mögliche Lösung für die oben genannten Probleme kann in der Bereitstellung von Herbizid-Kombinationen liegen, also der Mischung mehrerer Herbizide und/oder weiterer Komponenten aus der Gruppe agrochemischer Wirkstoffe anderer Art sowie im Pflanzenschutz üblicher Zusatzstoffe und Formulierungshilfsmitteln, welche die gewünschten zusätzlichen Eigenschaften beisteuern. Allerdings treten bei der kombinierten Anwendung mehrerer Wirkstoffe nicht selten Phänomene der chemischen, physikalischen oder biologischen Unverträglichkeit auf, z.B. mangelnde Stabilität einer gemeinsamen Formulierung, Zersetzung eines Wirkstoffes bzw. Antagonismus in der biologischen Wirksamkeit der Wirkstoffe. Daher müssen potentiell geeignete Kombinationen gezielt ausgewählt und experimentell auf ihre Eignung hin überprüft werden, wobei negative wie positive Ergebnisse im Vorhinein nicht sicher ausgeschlossen werden können.

Mischungen von Nicht-*N*-methyl-Derivaten der oben genannten Verbindungen sind prinzipiell bekannt (z.B. WO 2007/079965 A2), jedoch ist ihre Wirksamkeit im Mischungen mit anderen Herbiziden nur mit dimethoxypyimidinyl-substituierten Phenylderivaten in Einzelfällen belegt. Daneben existieren auch Mischungen von ausgewählten *N*-methyl-Derivaten der oben genannten Verbindungen mit einigen Kombinationspartnern (PCT/EP2008/000870, unveröffentlicht).

Die Aufgabe der vorliegenden Erfindung bestand darin, dem Stand der Technik gegenüber alternative oder verbesserte Pflanzenschutzmittel zur Verfügung zu stellen.

Überraschenderweise wurde nun gefunden, dass diese Aufgabe durch Herbizid-Kombinationen von Dimethoxytriazinyl-substituierten Difluormethansulfonylaniliden in Kombination mit strukturell anderen Herbiziden aus der Gruppe der (Sulfon)Amide gelöst werden kann, die in besonders günstiger Weise zusammenwirken, z.B. wenn sie zur Bekämpfung von unerwünschtem Pflanzenwuchs in gesäten und/oder gepflanzten Kulturpflanzen wie Weizen (Hart- und Weichweizen), Mais, Soja, Zuckerrübe, Zuckerrohr, Baumwolle, Reis (gepflanzt oder gesät unter 'Upland'- oder 'Paddy'-Bedingungen mit Indica- und/oder Japonica-Arten sowie Hybriden/Mutanten/GMOs), Bohnen (wie beispielsweise Buschbohne und Pferdebohne), Flachs, Gerste, Hafer, Roggen, Triticale, Raps, Kartoffel, Hirse (Sorghum), Weideland, Grün-/Rasenflächen, in Obstanbauanlagen (Plantagenkulturen) oder auf Nicht-Kulturflächen (z.B. Plätzen von Wohn- und Industrieanlagen, Gleisanlagen), insbesondere in Reiskulturen (gepflanzt oder gesät unter 'Upland'- oder 'Paddy'-Bedingungen mit Indica- und/oder Japonica-Arten sowie Hybriden/Mutanten/GMOs) eingesetzt werden.

Verbindungen aus der Gruppe der (Sulfon)Amide, sind bereits als herbizide Wirkstoffe für die Bekämpfung von unerwünschtem Pflanzenwachstum bekannt; siehe hierzu beispielsweise EP 239414, US 4288244, DE 3303388, US 5457085, US 3120434, US 3480671, EP 206251, EP 205271, US 2556664, US 3534098, EP 53011, US 04385927, EP 348737, DE 2822155, US 3894078, GB 869169, EP 447004, DE 1039779, HU 176582, US 3442945, DE 2305495, DE 2648008, DE 2328340, DE 1014380, HU 53483, US 4802907, GB 1040541, US 2903478, US 3177061, US 2695225, DE 1567151, GB 574995, DE 1031571, US 3175897, JP 1098331, US 2913327, WO 8300329, JP 80127302, DE 1300947, DE 2135768, US 3175887, US 3836524, JP 85067463, US 3582314, US 53330821, EP 131258, US 4746353, US 4420325, US 4394506, US 4127405, US 4479821, US 5009699, EP, 136061, EP 324569, EP, 184385, WO 2002030921, WO 09215576, WO 09529899, US 4668277, EP 305939, WO 09641537, WO 09510507, EP 7677, CN 01080116, US 4789393, EP 971902, US 5209771, EP 84020, EP 120814, EP 87780, WO 08804297, EP 477808, EP 30142, EP 44808, EP 202830, WO 09741112, EP 336587, DE 4038430, CN 01323789, EP 189069, WO 2005103044, WO 2003061388, EP 507171, WO 2001005788, US 5163995, EP 142152, US 5828924, WO 2002036595 und die in den zuvor genannten Druckschriften zitierte Literatur.

Gegenstand der vorliegende Erfindung ist somit eine Herbizid-Kombination enthaltend Komponenten (A) und (B), wobei

(A) bedeutet die Verbindung oder deren Salze beschrieben durch die Formel (A-1):

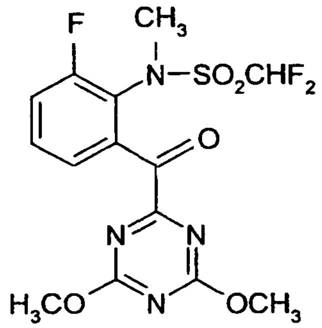

(A1)

und

(B) bedeutet ein oder mehrere Herbizide aus der Gruppe der (Sulfon)Amide bestehend aus:

der Untergruppe der Anilide (Untergruppe 3), bestehend aus:

(B3-1) Diflufenican (PM #258), z.B. *N*-(2,4-difluorophenyl)-2-[3-(trifluoromethyl)phenoxy]-3-pyridinecarboxamide (Aufwandmenge: 1 - 800 g AS/ha, vorzugsweise 1,5 - 500 g AS/ha; Gewichtsverhältnis A : B = 1 : 800 - 500 : 1, vorzugsweise 1 : 100 - 170 : 1);

(B3-3) Flufenacet (PM #381), syn. thiafluamide, z.B. *N*-(4-fluorophenyl)-*N*-(1-methylethyl)-2-[[5-(trifluoromethyl)-1,3,4-thiadiazol-2-yl]oxy]acetamide, (Aufwandmenge: 10 - 3000 g AS/ha, vorzugsweise 20 - 2000 g AS/ha; Gewichtsverhältnis A : B = 1 : 3000 - 50 : 1, vorzugsweise 1 : 400-10 : 1);

(B3-4) Mefenacet (PM #523), z.B. 2-(2-benzothiazolyloxy)-*N*-methyl-*N*-phenylacetamide (Aufwandmenge: 2,5 - 2500 g AS/ha, vorzugsweise 5-2000 g AS/ha; Gewichtsverhältnis A : B = 1 : 2500 - 200 : 1, vorzugsweise 1 : 400 - 40 : 1);

(B3-8) Propanil (PM #690), z.B. *N*-(3,4-dichlorophenyl)propanamide (Aufwandmenge: 50 - 5000 g AS/ha, vorzugsweise 100 - 4000 g AS/ha; Gewichtsverhältnis A : B = 1 : 5000 - 10 : 1, vorzugsweise 1 : 800 - 2 : 1);

der Untergruppe der Chloracetanilide (Untergruppe 4) bestehend aus:

(B4-3) Butachlor (PM #102), z.B. *N*-(butoxymethyl)-2-chloro-N-(2,6-diethylphenyl)acetamide (Aufwandmenge: 10 - 5000 g AS/ha, vorzugsweise 30 - 4000 g AS/ha; Gewichtsverhältnis A : B = 1 : 5000 - 50 : 1, vorzugsweise 1 : 800 - 7 : 1);
(B4-8) Pretilachlor (PM #677), z.B. 2-chloro-*N*-(2,6-diethylphenyl)-N-(2-propoxyethyl)acetamide (Aufwandmenge: 10 - 5000 g AS/ha, vorzugsweise 30 - 4000 g AS/ha; Gewichtsverhältnis A : B = 1 : 5000 - 500 : 1, vorzugsweise 1 : 800 - 7 : 1);
(B6-7) Molinate (PM #578), z.B. *S*-ethyl hexahydro-1*H*-azepine-1-carbothioate (Aufwandmenge: 10 - 5000 g AS/ha, vorzugsweise 30 - 4000 g AS/ha; Gewichtsverhältnis A : B = 1 : 5000 - 50 : 1, vorzugsweise 1 : 800 - 7 : 1);

der Untergruppe der Sulfonylharnstoffe (Untergruppe 7), bestehend aus:

(B7-6) Cinosulfuron (PM #158), syn. Monosulfuron, z.B. *N*-[[(4,6-dimethoxy-1,3,5-triazin-2-yl)amino]carbonyl]-2-(2-methoxyethoxy)benzenesulfonamide (Aufwandmenge: 1,5 - 1500 g AS/ha, vorzugsweise 2,5 - 500 g AS/ha; Gewichtsverhältnis A : B = 1 : 1500 - 350 : 1, vorzugsweise 1 : 100 - 80 : 1);
(B7-7) Cyclosulfamuron (PM #192), z.B. *N*-[[[2-(cyclopropylcarbonyl)phenyl]amino]sulfonyl]-*N'*-(4,6-dimethoxy-2-pyrimidinyl)urea (Aufwandmenge: 1,5 - 1000 g AS/ha, vorzugsweise 2,5 - 900 g AS/ha; Gewichtsverhältnis A : B = 1 : 1000 - 350 : 1, vorzugsweise 1 : 160 - 80 : 1);
(B7-8) Ethametsulfuron-methyl (PM #318), z.B. methyl 2-[[[[[4-ethoxy-6-(methylamino)-1,3,5-triazin-2-yl]amino]carbonyl]amino]sulfonyl]benzoate (Aufwandmenge: 1 - 500 g AS/ha, vorzugweise 2 - 300 g AS/ha; Gewichtsverhältnis A : B = 1 : 500 - 500 : 1, vorzugsweise 1 : 60 - 200 : 1);
(B7-16) Iodosulfuron-methyl-natrium (PM #480), z.B. methyl 4-iodo-2-[[[[(4-methoxy-6-methyl-1,3,5-triazin-2-yl)amino]carbonyl]amino]sulfonyl]benzoate sodium salt, umfassend auch dessen Säure (z.B. 4-Iod-2-(4-Methoxy-6-methyl-1,3,5-triazin-2-ylcarbamoylsulfamoyl)-benzoesäure) und weitere Salze und Ester - auch in Salzform - (Derivate) (Aufwandmenge: 0,1 - 50 g AS/ha, vorzugsweise 0,2 - 30 g AS/ha; Gewichtsverhältnis A : B = 1 : 50 - 5000 : 1, vorzugsweise 1 : 6 - 1000 : 1);
(B7-17) Mesosulfuron-methyl (PM #532) z.B. methyl 2-[[[[(4,6-dimethoxy-2-pyrimidinyl)amino]carbonyl]amino]sulfonyl]-4-[[(methylsulfonyl)amino]methyl]benzoate, umfassend auch dessen Säure (z.B. 4-Methylsulfonylamino-2-(4,6-Dimethoxy-pyrimidin-2-ylcarbamoylsulfamoyl)-benzoesäure) und weitere Salze und Ester - auch in Salzform - (Derivate) (Aufwandmenge: 0,1 - 150 g AS/ha, vorzugsweise 0,2 - 100 g AS/ha; Gewichtsverhältnis A : B = 1 : 150 - 5000 : 1, vorzugsweise 1 : 20 - 1000 : 1);
(B7-20) Orthosulfamuron (PM #614), z.B. 2-[[[[[(4,6-dimethoxy-2-pyrimidinyl)amino]carbonyl]amino]sulfonyl]amino]-*N,N*-dimethylbenzamide (Aufwandmenge: 1 - 500 g AS/ha, vorzugsweise 3 - 400 g AS/ha; Gewichtsverhältnis A : B = 1 : 500 - 500 : 1, vorzugsweise 1 : 80 - 70 : 1);

der Untergruppe der Sulfonylaminocarbonyltriazolinone (Untergruppe 8), bestehend aus:

(B8-3) Thiencarbazone-methyl (CPCN), z.B. methyl 4-[[[(4,5-dihydro-3-methoxy-4-methyl-5-oxo-1*H*-1,2,4-triazol-1-yl)carbonyl]amino]sulfonyl]-5-methyl-3-thiophenecarboxylate, umfassend auch dessen Säure (z.B. 4-[[[(4,5-dihydro-3-methoxy-4-methyl-5-oxo-1*H*-1,2,4-triazol-1-yl)carbonyl]amino]sulfonyl]-5-methyl-3-thiophenecarboxylic acid), Salze und weitere Ester - auch in Salzform - (Derivate) (Aufwandmenge: 0,1 - 100 g AS/ha, vorzugsweise 0,3 - 80 g AS/ha; Gewichtsverhältnis A : B = 1 : 100 - 5000 : 1, vorzugsweise 1 : 16 - 700 : 1);

der Untergruppe der Triazolopyrimidine (Untergruppe 9), bestehend aus:

(B9-6) Penoxsulam (PM #641), z.B. 2-(2,2-difluoroethoxy)-*N*-(5,8-dimethoxy[1,2,4]triazolo[1,5-*c*]pyrimidin-2-yl)-6-(trifluoromethyl)benzenesulfonamide (Aufwandmenge: 0,1 - 500 g AS/ha, vorzugsweise 0,3 - 400 g AS/ha; Gewichtsverhältnis A : B = 1 : 500 - 5000 : 1, vorzugsweise 1 : 80 - 700 : 1);
(B9-7) Pyroxsulam (CPCN), z.B. *N*-(5,7-dimethoxy[1,2,4]triazolo[1,5-a]pyrimidin-2-yl)-2-methoxy-4-(trifluoromethyl)-3-pyridinesulfonamide (Aufwandmenge: 0,1 - 500 g AS/ha, vorzugsweise 0,3 - 400 g AS/ha; Gewichtsverhältnis A : B = 1 : 500 - 5000 : 1, vorzugsweise 1 : 80 - 700 : 1);

Die die oben in Gruppe B genannten Verbindungen sind entweder mit dem "Common name" nach der International Organization for Standardization (ISO) oder mit dem chemischen Namen oder mit einer Codenummer (Entwicklungscode) bezeichnet; wie beispielsweise bekannt aus folgenden Quellen "The Pesticide Manual", 14. Auflage

2006/2007 oder "The e-Pesticide Manual", Version 4.0 (2006-07), jeweils herausgegeben vom British Crop Protection Council (Abkürzung: "PM #.." mit der jeweilig laufenden Eintragsnummer/"sequentiell entry number"), und dort zitierter Literatur, aus "The Compendium of Pesticide Common Names" (Abkürzung: "CPCN"; Internet-URL: http://www.alanwood.net/pesticides/) und/oder anderen Quellen. Durch Verwendung der oben genannten Bezeichnungen, z.B. in der Kurzform des "Common names", sind stets sämtliche Anwendungsformen (Derivate) wie Säuren, Salze, Ester und Isomere wie Stereoisomere und optische Isomere mitumfasst, soweit nicht bereits näher spezifisch definiert. Die handelsüblichen Anwendungsformen der in Gruppe B genannten Herbizide sind bevorzugt. Die Abkürzung "AS/ha" oben bedeutet dabei "Aktivsubstanz pro Hektar" und ist bezogen auf 100%igen Wirkstoff.

Als Komponente (B) bevorzugte Verbindungen sind: (B3-1) Diflufenican, (B3-3) Flufenacet, (B3-4) Mefenacet, (B3-8) Propanil, (B4-3) Butachlor, (B4-8) Pretilachlor, (B6-7) Molinate, (B7-6) Cinosulfuron, (B7-7) Cyclosulfamuron, (B7-16) Iodosulfuron-methylnatrium, (B7-17) Mesosulfuron-methyl, (B7-20) Orthosulfamuron.

Die erfindungsgemäßen Herbizid-Kombinationen können zusätzliche weitere Komponenten enthalten: z.B. agrochemische Wirkstoffe anderer Art und/oder im Pflanzenschutz übliche Zusatzstoffe und/oder Formulierungshilfsmittel, oder zusammen mit diesen eingesetzt werden. Im Folgenden umfasst die Verwendung des Begriffs "Herbizid-Kombination(en)" bzw. "Kombination(en)"auch die so entstandenen "herbiziden Mittel".

Die Verbindungen der Formel (I) können Salze bilden. Salzbildung kann durch Einwirkung einer Base auf solche Verbindungen der Formel (I) erfolgen, die ein acides Wasserstoffatom tragen. Geeignete Basen sind beispielsweise organische Amine, wie Trialkylamine, Morpholin, Piperidin oder Pyridin sowie Ammonium-, Alkali- oder Erdalkalimetallhydroxide, -carbonate und -hydrogencarbonate, insbesondere Natrium- und Kaliumhydroxid, Natrium- und Kaliumcarbonat und Natrium- und Kaliumhydrogencarbonat, Alkali- oder Erdalkalialkylate, insbesondere Natrium- oder Kaliummethylat, -ethylat, n-propylat, i-propylat, -n-butylat oder t-butylat. Diese Salze sind Verbindungen, in denen der acide Wasserstoff durch ein für die Landwirtschaft geeignetes Kation ersetzt wird, beispielsweise Metallsalze, insbesondere Alkalimetallsalze oder Erdalkalimetallsalze, insbesondere Natrium- und Kaliumsalze, oder auch Ammoniumsalze, Salze mit organischen Aminen oder quartäre (quaternäre) Ammoniumsalze, zum Beispiel mit Kationen der Formel $[NRR'R''R''']^+$, worin R bis R''' jeweils unabhängig voneinander einen organischen Rest, insbesondere Alkyl, Aryl, Arylalkyl oder Alkylaryl darstellen. In Frage kommen auch Alkylsulfonium- und Alkylsulfoxoniumsalze, wie $(C_1-C_4)$-Trialkylsulfonium- und $(C_1-C_4)$-Trialkylsulfoxoniumsalze. Die Verbindungen der Formel (I) können auch durch Anlagerung einer geeigneten anorganischen oder organischen Säure, wie beispielsweise Mineralsäuren, wie beispielsweise HCl, HBr, $H_2SO_4$, $H_3PO_4$ oder $HNO_3$, oder organische Säuren, z.B. Carbonsäuren, wie Ameisensäure, Essigsäure, Propionsäure, Oxalsäure, Milchsäure oder Salicylsäure oder Sulfonsäuren, wie zum Beispiel p-Toluolsulfonsäure, an eine basische Gruppe, wie z.B. Amino, Alkylamino, Dialkylamino, Piperidino, Morpholino oder Pyridino, Salze bilden. Diese Salze enthalten dann die konjugierte Base der Säure als Anion.

Im Folgenden werden für den Begriff "Komponente(n)" auch die Bezeichnungen "Herbizid(e)", "Einzelherbizid (e)", "Verbindung(en)" oder "Wirkstoff(e)" synonym im Kontext verwendet.

In bevorzugter Ausführungsform enthalten die erfindungsgemäßen Herbizid-Kombinationen die Herbizide (A) und (B) in einem wirksamen Gehalt und/oder weisen synergistische Wirkungen auf. Die synergistischen Wirkungen können z.B. bei gemeinsamer Ausbringung der Herbizide (A) und (B) beispielsweise als Co-Formulierung oder als Tankmischung beobachtet werden, sie können jedoch auch bei zeitlich versetzter Anwendung (Splitapplikation, Splitting) festgestellt werden. Möglich ist auch die Anwendung der Herbizide oder der Herbizid-Kombinationen in mehreren Portionen (Sequenzanwendung), z.B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe Anwendung der Herbizide (A) und (B) der jeweiligen Kombination, besonders bevorzugt die gemeinsame Anwendung.

Die synergistischen Effekte erlauben eine Reduktion der Aufwandmengen der Einzelherbizide, eine höhere und/oder längere Wirkungsstärke bei gleicher Aufwandmenge, die Kontrolle bislang nicht erfasster Arten (Lücken), die Kontrolle von Arten, die Toleranzen oder Resistenzen gegenüber einzelnen oder mehreren Herbiziden aufweisen, eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Beispielsweise werden durch die erfindungsgemäßen Kombinationen aus Herbiziden (A) + (B) synergistische Wirkungssteigerungen möglich, die weit und in unerwarteter Weise über die Wirkungen hinausgehen, die mit den Einzelherbiziden (A) und (B) erreicht werden.

Die genannte Formel (I) umfasst alle Stereoisomeren und deren Gemische, insbesondere auch racemische Gemische, und - soweit Enantiomere möglich sind - das jeweils biologisch wirksame Enantiomere. Dies gilt auch für mögliche Rotamere der Formel (I).

Die Herbizide der Gruppe (A) hemmen vorwiegend das Enzym Acetolactatsynthase (ALS) und damit die Proteinbiosynthese in Pflanzen. Die Aufwandmenge der Herbizide (A) kann in einem weiten Bereich variieren, beispielsweise zwischen 0,1 g und 1000 g AS/ha (AS/ha bedeutet dabei im Folgenden "Aktivsubstanz pro Hektar" = bezogen auf 100%igen Wirkstoff). Bei Anwendungen mit Aufwandmengen von 0,1 g bis 1000 g AS/ha der Herbizide (A), vorzugsweise

der Verbindungen (A-1) bis (A-8), wird im Vorsaat-, Vorpflanz- bzw. Vor- und Nachauflaufverfahren ein relativ breites Spektrum an Schadpflanzen bekämpft, z.B. an annuellen und perennierenden, mono- oder dikotylen Unkräutern, Ungräsern, Cyperaceen sowie an unerwünschten Kulturpflanzen. Bei den erfindungsgemäßen Kombinationen liegen die Aufwandmengen in der Regel niedriger, z.B. im Bereich von 0,1 g bis 500 g AS/ha, vorzugsweise 0,5 g bis 200 g AS/ha, besonders bevorzugt 1 g bis 150 g AS/ha.

Die Herbizide der Gruppe (B) beeinflussen beispielsweise die Fettsäurebiosynthese, Zellteilung, das Photosystem II und Acetolactatsynthase und eignen sich sowohl für einen Einsatz im Vorauflauf wie auch im Nachauflauf. Die Aufwandmenge der Herbizide (B) kann in einem weiten Bereich variieren, beispielsweise zwischen 0,1 g und 7000 g AS/ha (AS/ha bedeutet dabei im Folgenden "Aktivsubstanz pro Hektar" = bezogen auf 100%igen Wirkstoff). Bei Anwendungen mit Aufwandmengen von 0,1 g bis 5000 g AS/ha der Herbizide (B), vorzugsweise der Verbindungen (B1-2), (B1-4), (B1-6), (B1-7), (B3-1), (B3-3), (B3-4), (B3-8), (B4-1), (B4-2), (B4-3), (B4-5), (B4-7), (B4-8), (B5-1), (B5-3), (B5-5), (B5-6), (B6-1), (B6-5), (B6-7), (B6-10), (B6-11), (B6-12), (B7-1), (B7-2), (B7-3), (B7-4), (B7-6), (B7-7), (B7-9), (B7-11), (B7-12), (B7-13), (B7-14), (B7-15), (B7-16), (B7-17), (B7-18), (B7-19), (B7-20), (B7-21), (B7-23), (B7-24), (B7-25), (B7-28), (B7-30), (B7-31), (B7-33), (B7-36), (B8-1), (B8-2), (B8-3), (B9-3), (B9-6) und (B9-7), wird im Vor- und Nachauflaufverfahren ein relativ breites Spektrum an Schadpflanzen bekämpft, z.B. an annuellen und perennierenden, mono- oder dikotylen Unkräutern, Ungräsern, Cyperaceen sowie an unerwünschten Kulturpflanzen. Bei den erfindungsgemäßen Kombinationen liegen die Aufwandmengen in der Regel niedriger, z.B. im Bereich von 0,1 g bis 7000 g AS/ha, vorzugsweise von 0,2 g bis 5000 g AS/ha, besonders bevorzugt 0,5 g bis 2500 g AS/ha.

Bevorzugt sind Herbizid-Kombinationen aus einem oder mehreren Herbiziden (A) mit einem oder mehreren Herbiziden (B). Weiter bevorzugt sind Kombinationen von Herbiziden (A) mit einem oder mehreren Herbiziden (B). Dabei sind auch solche Kombinationen erfindungsgemäß, die noch ein oder mehrere weitere, von Herbiziden (A) und (B) verschiedene agrochemische Wirkstoffe, die ebenfalls die Funktion eines selektiven Herbizides aufweisen, enthalten.

Für Kombinationen mit drei oder mehr Wirkstoffen gelten die nachstehend insbesondere für erfindungsgemäße Zweier-Kombinationen erläuterten bevorzugten Bedingungen in erster Linie ebenfalls, sofern darin die erfindungsgemäßen Zweier-Kombinationen enthalten sind.

Bereiche für geeignete Mengenverhältnisse der Verbindungen (A) und (B) ergeben sich z.B. aus den genannten Aufwandmengen für die Einzelstoffe. In den erfindungsgemäßen Kombinationen können die Aufwandmengen in der Regel reduziert werden. Bevorzugte Mischungsverhältnisse der kombinierten Herbizide (A) : (B) in den erfindungsgemäßen Kombinationen sind durch folgende Gewichtsverhältnisse charakterisiert:

Das Gewichtsverhältnis (A) : (B) der Komponenten (A) und (B) liegt im Allgemeinen im Bereich von 1 : 7000 bis 5000 : 1, vorzugsweise 1 : 5000 bis 2500 : 1, insbesondere 1 : 3000 bis 1000 : 1.

Von besonderem Interesse ist die Anwendung von Herbizid-Kombinationen mit einem Gehalt an folgenden Verbindungen (A) + (B):

(A-1) + (B3-1), (A-1) + (B3-3), (A-1) + (B3-4), (A-1) + (B3-8), (A-1) + (B4-3), (A-1) + (B4-8), (A-1) + (B6-7), (A-1) + (B7-6), (A-1) + (B7-7), (A-1) + (B7-8), (A-1) + (B7-16), (A-1) + (B7-17), (A-1) + (B7-20), (A-1) + (B8-3), (A-1) + (B9-6), (A-1) + (B9-7);

Weiterhin können die erfindungsgemäßen Herbizid-Kombinationen als zusätzliche weitere Komponenten verschiedene agrochemische Wirkstoffe beispielsweise aus der Gruppe der Safener, Fungizide, Insektizide, Akarizide, Nematizide, Schutzstoffen gegen Vogelfraß, Bodenstrukturverbesserungsmitteln, Pflanzennährstoffen (Düngemitteln), und sich strukturell von den Herbiziden (A) und (B) unterscheidenden Herbizide und Pflanzenwachstumsregulatoren oder aus der Gruppe der im Pflanzenschutz üblichen Zusatzstoffe und Formulierungshilfsmittel enthalten.

So kommen als weitere Herbizide beispielsweise folgende von den Herbiziden (A) und (B) sich strukturell unterscheidende Herbizide in Frage, vorzugsweise herbizide Wirkstoffe, die auf einer Inhibition von beispielsweise Acetolactat-Synthase, Acetyl-CoA-Carboxylase, Cellulose-Synthase, Enolpyruvylshikimat-3-phosphat-Synthase, Glutamin-Synthetase, p-Hydroxyphenylpyruvat-Dioxygenase, Phytoendesaturase, Photosystem I, Photosystem II, Protoporphyrinogen-Oxidase beruhen, einsetzbar, wie sie z.B. aus Weed Research 26 (1986) 441-445 oder "The Pesticide Manual", 13. Auflage 2003 oder 14. Auflage 2006/2007, oder in dem entsprechenden "The e-Pesticide Manual", Version 4.0 (2006-07), jeweils herausgegeben vom British Crop Protection Council, und dort zitierter Literatur beschrieben sind. Listen von "Common names" sind auch in "The Compendium of Pesticide Common Names" im Internet verfügbar. Die Herbizide sind dabei entweder mit dem "Common name" nach der International Organization for Standardization (ISO) oder mit dem chemischen Namen oder mit der Codenummer bezeichnet, und umfassen stets sämtliche Anwendungsformen wie Säuren, Salze, Ester und Isomere wie Stereoisomere und optische Isomere. Dabei sind beispielhaft eine und zum Teil auch mehrere Anwendungsformen genannt:

Acibenzolar, Acibenzolar-S-methyl, Acifluorfen, Acifluorfen-natrium, Aclonifen, Allidochlor, Alloxydim, Alloxydim-natrium, Ametryn, Amicarbazone, Amidochlor, Aminocyclopyrachlor, Aminopyralid, Amitrole, Ammoniumsulfamat, Ancymidol, Anilofos, Atrazine, Azafenidin, Aziprotryn, BAH-043, BAS-140H, BAS-693H, BAS-714H, BAS-762H, BAS-776H, Benazolin, Benazolin-ethyl, Bencarbazone, Benfluralin, Benfuresate, Bensulide, Bentazone, Benzfendizone, Benzobicyclon, Benzofenap, Benzofluor, Benzoylprop, Bifenox, Bilanafos, Bilanafos-natrium, Bispyribac, Bispyribac-natrium, Bromacil, Bromofenoxim, Bromoxynil, Bromuron, Buminafos, Busoxinone, Butafenacil, Butamifos, Butenachlor, Butralin, Butroxydim, Cafenstrole, Carfentrazone, Carfentrazone-ethyl, Chlomethoxyfen, Chloramben, Chlorazifop, Chlorazifop-butyl, Chlorbromuron, Chlorbufam, Chlorfenac, Chlorfenacnatrium, Chlorfenprop, Chlorflurenol, Chlorflurenol-methyl, Chloridazon, Chlormequat-chlorid, Chlornitrofen, Chlorophthalim, Chlorthal-dimethyl, Chlorotoluron, Cinidon, Cinidon-ethyl, Cinmethylin, Clethodim, Clodinafop Clodinafop-propargyl, Clofencet, Clomazone, Clomeprop, Cloprop, Clopyralid, Cumyluron, Cyanamide, Cyanazine, Cyclanilide, Cycloxydim, Cycluron, Cyhalofop, Cyhalofop-butyl, Cyperquat, Cyprazine, Cyprazole, 2,4-D, 2,4-DB, Daimuron/Dymron, Dalapon, Daminozide, Dazomet, n-Decanol, Desmetryn, Detosyl-Pyrazolate (DTP), Diallate, Dicamba, Dichlobenil, Dichlorprop, Dichlorprop-P, Diclofop, Diclofop-methyl, Diclofop-P-methyl, Diethatyl, Diethatyl-ethyl, Difenoxuron, Difenzoquat, Diflufenzopyr, Diflufenzopyr-natrium, Dimefuron, Dikegulac-natrium, Dimefuron, Dimethametryn, Dimethipin, Dimetrasulfuron, Dinitramine, Dinoseb, Dinoterb, Dipropetryn, Diquat, Diquat-dibromide, Dithiopyr, Diuron, DNOC, Eglinazine-ethyl, Endothal, Ethalfluralin, Ethephon, Ethidimuron, Ethiozin, Ethofumesate, Ethoxyfen, Ethoxyfen-ethyl, F-5331, d.h. N-[2-Chlor-4-fluor-5-[4-(3fluorpropyl)-4,5-dihydro-5-oxo-1H-tetrazol-1-yl]-phenyl]-ethansulfonamid, Fenoprop, Fenoxaprop, Fenoxaprop-P, Fenoxaprop-ethyl, Fenoxaprop-P-ethyl, Fentrazamide, Fenuron, Flamprop, Flamprop-M-isopropyl, Flamprop-M-methyl, Fluazifop, Fluazifop-P, Fluazifop-butyl, Fluazifop-P-butyl, Fluazolate, Fluchloralin, Flufenpyr, Flufenpyr-ethyl, Flumetralin, Flumiclorac, Flumiclorac-pentyl, Flumioxazin, Flumipropyn, Fluometuron, Fluorodifen, Fluoroglycofen, Fluoroglycofen-ethyl, Flupoxam, Flupropacil, Flupropanate, Flurenol, Flurenol-butyl, Fluridone, Flurochloridone, Fluroxypyr, Fluroxypyr-meptyl, Flurprimidol, Flurtamone, Fluthiacet, Fluthiacet-methyl, Fluthiamide, Fomesafen, Forchlorfenuron, Fosamine, Furyloxyfen, Gibberellinsäure, Glufosinate, Glufosinate-ammonium Glufosinate-P, Glufosinate-P-ammonium, Glufosinate-P-natrium, Glyphosate, Glyphosate-isopropylammonium, H-9201, Halosafen, Haloxyfop, Haloxyfop-P, Haloxyfop-ethoxyethyl, Haloxyfop-P-ethoxyethyl, Haloxyfop-methyl, Haloxyfop-P-methyl, Hexazinone, HW-02, Imazamethabenz, Imazamethabenz-methyl, Imazamox, Imazapic, Imazapyr, Imazaquin, Imazethapyr, Inabenfide, Indanofan, Indolessigsäure (IAA), 4-Indol-3-ylbuttersäure (IBA), loxynil, Ipfencarbazone, Isocarbamid, Isopropalin, Isoproturon, Isouron, Isoxaben, Isoxachlortole, Isoxaflutole, Isoxapyrifop, KUH-043, KUH-071, Karbutilate, Ketospiradox, Lactofen, Lenacil, Linuron, Maleinsäurehydrazid, MCPA, MCPB, MCPB-methyl, -ethyl und -natrium, Mecoprop, Mecoprop-natrium, Mecoprop-butotyl, Mecoprop-P-butotyl, Mecoprop-P-dimethylammonium, Mecoprop-P-2-ethylhexyl, Mecoprop-P-kalium, Mepiquat-chlorid, Mesotrione, Methabenzthiazuron, Metam, Metamifop, Metamitron, Methazole, Methoxyphenone, Methyldymron, 1-Methylcyclopropen, Methylisothiocyanat, Metobenzuron, Metobromuron, Metoxuron, Metribuzin, Monalide, Monocarbamide, Monocarbamide-dihydrogensulfat, Monolinuron, Monuron, MT 128, , NGGC-011, Naproanilide, NC-310, d.h. 4-(2,4-dichlorobenzoyl)-1-methyl-5-benzyloxypyrazole, Neburon, Nipyraclofen, Nitralin, Nitrofen, Nitrophenolat-natrium (Isomerengemisch), Nitrofluorfen, Nonansäure, Norflurazon, Oryzalin, Oxadiargyl, Oxadiazon, Oxaziclomefone, Oxyfluorfen, Paclobutrazol, Paraquat, Paraquat-dichlorid, Pelargonsäure (Nonansäure), Pendimethalin, Pendralin, Pentoxazone, Perfluidone, Phenisopham, Picloram, Pinoxaden, Piperophos, Pirifenop, Pirifenop-butyl, Probenazole, Profluazol, Procyazine, Prodiamine, Prifluraline, Profoxydim, Prohexadione, Prohexadionecalcium, Prohydrojasmone, Prometon, Prometryn, Propaquizafop, Propazine, Prosulfalin, Prynachlor, Pyraclonil, Pyraflufen, Pyraflufen-ethyl, Pyrasulfotole, Pyrazolynate (Pyrazolate), Pyrazoxyfen, Pyribambenz, Pyribambenz-isopropyl, Pyribenzoxim, Pyridafol, Pyridate, Pyriftalid, Pyriminobac, Pyriminobac-methyl, Pyrimisulfan, Pyrithiobac, Pyrithiobac-natrium, Pyroxasulfone, Quinclorac, Quinmerac, Quinoclamine, Quizalofop, Quizalofop-ethyl, Quizalofop-P, Quizalofop-P-ethyl, Quizalofop-P-tefuryl, Saflufenacil, Secbumeton, Sethoxydim, Siduron, Simazine, Simetryn, SN-1 06279, Sulcotrione, Sulfallate (CDEC), Sulfentrazone, Sulfosate (Glyphosate-trimesium), SYN-449, SYN-523, SYP-249, SYP-298, SYP-300, Tebutam, Tebuthiuron, Tecnazene, Tefuryltrione, Tembotrione, Tepraloxydim, Terbacil, Terbucarb, Terbuchlor, Terbumeton, Terbuthylazine, Terbutryn, TH-547, Thiafluamide, Thiazafluron, Thiazopyr, Thidiazimin, Thidiazuron, Tiocarbazil, Topramezone, Tralkoxydim, Triaziflam, Triazofenamide, Trichloressigsäure (TCA), Triclopyr, Tridiphane, Trietazine, Trifluralin, Trimeturon, Trinexapac, Trinexapacethyl, Tsitodef, Uniconazole, Uniconazole-P, ZJ-0166, ZJ-0270, ZJ-0543, ZJ-0862 sowie die folgenden Verbindungen

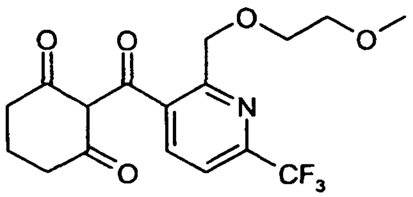

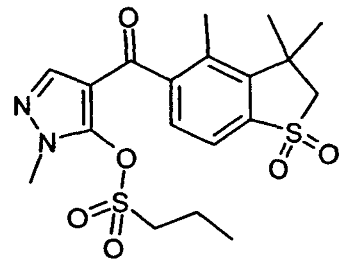

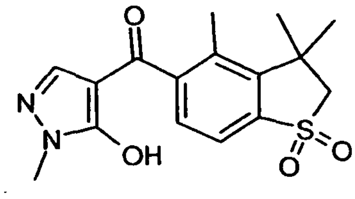

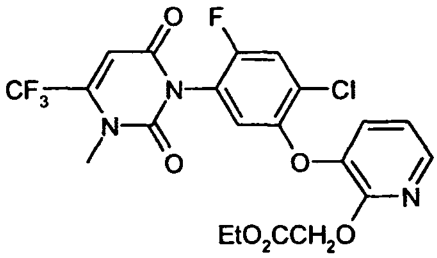

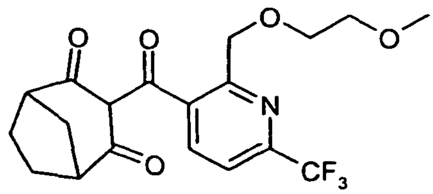

Von besonderem Interesse ist die selektive Bekämpfung von Schadpflanzen in Kulturen von Nutz- und Zierpflanzen. Obgleich die Herbizide (A) und (B), bereits in vielen Kulturen gute bis ausreichende Selektivität aufweisen, können prinzipiell in einigen Kulturen und vor allem auch im Falle von Mischungen mit anderen Herbiziden, die weniger selektiv sind, Phytotoxizitäten an den Kulturpflanzen auftreten. Diesbezüglich sind Kombinationen von Herbiziden (A) und (B) von besonderem Interesse, welche die erfindungsgemäß kombinierten herbiziden Wirkstoffe und einen oder mehrere Safener enthalten. Die Safener, welche in einem antidotisch wirksamen Gehalt eingesetzt werden, reduzieren die phytotoxischen Nebenwirkungen der eingesetzten Herbizide/Pestizide, z.B. in wirtschaftlich bedeutenden Kulturen wie Getreide (Weizen, Gerste, Roggen, Hafer, Mais, Reis, Hirse), Zuckerrübe, Zuckerrohr, Raps, Baumwolle, Soja oder in Obstanbauanlagen (Plantagenkulturen), vorzugsweise Getreide, insbesondere Reis.

Folgende Gruppen von Verbindungen kommen beispielsweise als Safener in Frage (einschließlich möglicher Stereoisomere und der in der Landwirtschaft gebräuchlichen Ester oder Salze):

Benoxacor
Cloquintocet (-mexyl)
Cyometrinil
Cyprosulfamide
Dichlormid
Dicyclonon
Dietholate
Disulfoton (= O,O-Diethyl S-2-ethylthioethyl phosphordithioat)
Fenchlorazole (-ethyl)
Fenclorim
Flurazole
Fluxofenim
Furilazole
Isoxadifen (-ethyl)
Mefenpyr (-diethyl)
Mephenate
Naphthalic anhydride
Oxabetrinil

"R-29148" (= 3-Dichloracetyl-2,2,5-trimethyl-1,3-oxazolidin),
"R-28725" (= 3-Dichloracetyl-2,2,-dimethyl-1 ,3-oxazolidin),
"PPG-1292" (= N-Allyl-N-[(1,3-dioxolan-2-yl)-methyl]-dichloracetamid),
"DKA-24" (= N-Allyl-N-[(allylaminocarbonyl)-methyl]-dichloracetamid),
"AD-67" oder "MON 4660" (= 3-Dichloracetyl-1-oxa-3-aza-spiro[4,5]decan), "TI-35" (= 1-Dichloracetyl-azepan), "Dimepiperate" oder "MY-93" (= Piperidin-1-thiocarbonsäure-S-1-methyl-1-phenylethylester),
"Daimuron" oder "SK 23" (= 1-(1-Methyl-1-phenylethyl)-3-p-tolyl-harnstoff),
"Cumyluron" = "JC-940" (= 3-(2-Chlorphenylmethyl)-1-(1-methyl-1-phenylethyl)harnstoff),
"Methoxyphenon" oder "NK 049" (= 3,3'-Dimethyl-4-methoxy-benzophenon),
"CSB" (= 1-Brom-4-(chlormethylsulfonyl)benzol)
"CL-304415" (=4-Carboxy-3,4-dihydro-2H-1-benzopyran-4-essigsäure; CAS-Regno: 31541-57-8)
"MG-191" (= 2-Dichlormethyl-2-methyl-1,3-dioxolan)
"MG-838" (=2-propenyl 1-oxa-4-azaspiro[4.5]decane-4-carbodithioate; CAS-Regno: 133993-74-5)

Methyl-(diphenylmethoxy)acetat (CAS-Regno: 41858-19-9 aus WO-A-1998/38856) Methyl-[(3-oxo-1H-2-benzothiopyran-4(3H)-yliden)methoxy]acetate (CAS-Regno: 205121-04-6 aus WO-A-1998/13361)
1,2-Dihydro-4-hydroxy-1-methyl-3-(5-tetrazolyl-carbonyl)-2-chinolon (CAS-Regno: 95855-00-8 aus WO-A-1999/000020).

Einige der Safener sind bereits als Herbizide bekannt und entfalten somit neben der Herbizidwirkung bei Schadpflanzen zugleich auch Schutzwirkung bei den Kulturpflanzen.

Die Gewichtsverhältnisse von Herbizid-Kombination zu Safener hängt im Allgemeinen von der Aufwandmenge an Herbizid und der Wirksamkeit des jeweiligen Safeners ab und kann innerhalb weiter Grenzen variieren, beispielsweise im Bereich von 90000:1 bis 1:5000, vorzugsweise 7000:1 bis 1:1600, insbesondere 3000:1 bis 1:500. Die Safener können analog den Verbindungen der Formel (I) oder deren Mischungen mit weiteren Herbiziden/Pestiziden formuliert werden und als Fertigformulierung oder Tankmischung mit den Herbiziden bereitgestellt und angewendet werden oder separat als Saatgut-, Boden- oder Blatt-Applikation zur Anwendung kommen.

Die erfindungsgemäßen Herbizid-Kombinationen (= herbiziden Mittel) weisen eine ausgezeichnete herbizide Wirksamkeit gegen ein breites Spektrum wirtschaftlich wichtiger mono- und dikotyler Schadpflanzen wie Unkräuter, Ungräser oder Cyperaceen auf, einschließlich Arten die resistent sind gegen herbizide Wirkstoffe wie Glyphosate, Glufosinate, Atrazin, Imidazolinon-Herbizide, Sulfonylharnstoffe, (Hetero-)aryloxy-aryloxyalkylcarbonsäuren bzw. -phenoxyalkylcarbonsäuren (sog. 'Fops'), Cyclohexanedionoxime (sog. 'Dims') oder Auxininhibitoren. Auch schwer bekämpfbare perennierende Schadpflanzen, die aus Rhizomen, Wurzelstöcken oder anderen Dauerorganen austreiben, werden durch die Wirkstoffe gut erfasst. Dabei können die Substanzen z.B. im Vorsaat-, Vorauflauf- oder Nachauflaufverfahren ausgebracht werden, z.B. gemeinsam oder getrennt. Bevorzugt ist z.B. die Anwendung im Nachauflaufverfahren, insbesondere auf die aufgelaufenen Schadpflanzen.

Im einzelnen seien beispielhaft einige Vertreter der mono- und dikotylen Unkrautflora genannt, die durch die erfindungsgemäßen Verbindungen kontrolliert werden können, ohne dass durch die Nennung eine Beschränkung auf bestimmte Arten erfolgen soll.

Auf der Seite der monokotylen Unkrautarten werden z.B. Avena spp., Alopecurus spp., Apera spp., Brachiaria spp., Bromus spp., Digitaria spp., Lolium spp., Echinochloa spp., Leptochloa spp., Fimbristylis spp., Panicum spp., Phalaris spp., Poa spp., Setaria spp. sowie Cyperusarten aus der annuellen Gruppe und auf seiten der perennierenden Spezies Agropyron, Cynodon, Imperata sowie Sorghum und auch ausdauernde Cyperusarten gut erfasst.

Bei dikotylen Unkrautarten erstreckt sich das Wirkungsspektrum auf Arten wie z.B. Abutilon spp., Amaranthus spp., Chenopodium spp., Chrysanthemum spp., Galium spp., Ipomoea spp., Kochia spp., Lamium spp., Matricaria spp., Pharbitis spp., Polygonum spp.,Sida spp., Sinapis spp., Solanum spp., Stellaria spp., Veronica spp. Eclipta spp., Sesbania spp., Aeschynomene spp. und Viola spp., Xanthium spp., auf der annuellen Seite sowie Convolvulus, Cirsium, Rumex und Artemisia bei den perennierenden Unkräutern.

Werden die Wirkstoffe der erfindungsgemäßen Herbizid-Kombinationen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von zwei bis vier Wochen vollkommen ab.

Bei Applikation der Wirkstoffe auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird. Die Wirkstoffe können auch in Reis in das Wasser appliziert werden und werden dann über Boden, Sproß und Wurzel aufgenommen.

Die erfindungsgemäßen Herbizid-Kombinationen zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, dass die in den Kombinationen verwendeten und wirksamen Dosierungen von Verbindungen (A) und (B) so gering eingestellt werden können, dass ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäßen Kombinationen von Wirkstoffen wird eine erhebliche Reduzierung der nötigen Aufwandmenge der Wirkstoffe ermöglicht.

In bevorzugter Ausführungsform sind die erfindungsgemäßen Herbizid-Kombinationen der Herbizide (A) und (B) hervorragend geeignet zur selektiven Bekämpfung von Schadpflanzen in Reiskulturen. Hierzu zählen alle möglichen Formen des Reisanbaus mit den unterschiedlichsten Bedingungen, wie Trocken-("upland", "dry") oder Wasseranbau ("paddy"), wobei die Bewässerung natürlich ("rainfall") und/oder künstlich ("irrigated", "flooded") erfolgen kann. Bei dem hierbei verwendeten Reis kann es sich um konventionell gezüchtetes Saatgut, HybridSaatgut, aber auch um resistentes, zumindest tolerantes Saatgut (mutagen oder transgen erzeugt) handeln, die sich aus den Formenkreisen Indica oder Japonica sowie aus Kreuzungen der beiden ableiten können.

Die erfindungsgemäßen Herbizid-Kombinationen können in allen Applikationsarten, die für Reis-Herbizide üblich sind, eingesetzt werden. Besonders vorteilhaft werden sie in der Spritzapplikation und/oder in der "submerged application" eingesetzt. Bei der sogenannten "submerged application" bedeckt das Anstauwasser schon zum Zeitpunkt der Applikation die Erde um bis zu 3 -20 cm. Die erfindungsgemäßen Herbizid-Kombinationen werden dann direkt, z.B. in Form eines Granulats in das Wasser der angestauten Felder gegeben. Weltweit wird die Spritzapplikation vorwiegend bei gesätem Reis ("direct seeded rice") und die sogenannte "submerged application" vorwiegend bei verpflanztem Reis ("transplanted rice") eingesetzt.

Die erfindungsgemäßen Herbizid-Kombinationen erfassen ein breites, insbesondere für Reiskulturen spezifisches Unkrautspektrum. Auf der Seite der monokotylen Unkräuter werden z.B. Gattungen, wie Echinochloa spp., Panicum spp., Poa spp., Leptochloa spp., Brachiaria spp., Digitaria spp., Setaria spp. Cyperus spp., Monochoria spp., Fimbristylis spp., Sagittaria spp., Eleocharis spp., Scirpus spp., Alisma spp., Aneilema spp., Blyxa spp., Eriocaulon spp., Potamogeton spp. und ähnliche, gut erfasst, insbesondere die Arten Echinochloa oryzicola, Monochoria vaginalis, Eleocharis acicularis, Eleocharis kuroguwai, Cyperus difformis, Cyperus serotinus, Sagittaria pygmaea, Alisma canaliculatum, Scirpus juncoides. Bei den dikotylen Unkräutern erstreckt sich das Wirkungsspektrum auf Gattungen, wie z.B. Polygonum spp., Rorippa spp., Rotala spp., Lindernia spp., Bidens spp., Sphenoclea spp., Dopatrium spp., Eclipta spp., Elatine spp., Gratiola spp., Lindernia spp., Ludwigia spp., Oenanthe spp., Ranunculus spp., Deinostema spp. und ähnliche. Insbesondere Arten, wie Rotala indica, Sphenoclea zeylanica, Lindernia procumbens, Ludwigia prostrate, Potamogeton distinctus, Elatine triandra, Oenanthe javanica werden gut erfasst.

Bei gemeinsamer Anwendung von Herbiziden der Gruppe (A) und solchen der Gruppe (B) treten bevorzugt überadditive (= synergistische) Effekte auf. Dabei ist die Wirkung in den Kombinationen stärker als die zu erwartende Summe der Wirkungen der eingesetzten Einzelherbizide. Die synergistischen Effekte erlauben eine Reduzierung der Aufwandmenge, die Bekämpfung eines breiteren Spektrums von Unkräutern, Ungräsern und Cyperaceen, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraums. Teilweise wird durch den Einsatz der Kombinationen auch die Menge an schädlichen Inhaltsstoffen, wie Stickstoff oder Ölsäure, und deren Eintrag in den Boden reduziert.

Die genannten Eigenschaften und Vorteile sind in der praktischen Unkrautbekämpfung gefordert, um landwirtschaftliche/ forstwirtschaftliche/ gärtnerische Kulturen oder Grünland/Weideflächen von unerwünschten Konkurrenzpflanzen freizuhalten und damit die Erträge qualitativ und quantitativ zu sichern und/oder zu erhöhen. Der technische Standard wird durch diese neuen Herbizid-Kombinationen hinsichtlich der beschriebenen Eigenschaften deutlich übertroffen.

Aufgrund ihrer herbiziden und pflanzenwachstumsregulatorischen Eigenschaften können die erfindungsgemäßen Herbizid-Kombinationen zur Bekämpfung von Schadpflanzen in bekannten Pflanzenkulturen oder noch zu entwikkelnden toleranten oder gentechnisch veränderten Kultur- und Energiepflanzen eingesetzt werden. Die transgenen Pflanzen (GMOs) zeichnen sich in der Regel durch besondere vorteilhafte Eigenschaften aus, neben den Resistenzen gegenüber den erfindungsgemäßen Herbizid-Kombinationen beispielsweise durch Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z.B. das Erntegut hinsichtlich Menge, Qualität, Lagerfähigkeit, sowie der Zusammensetzung von speziellen Inhaltsstoffen.

So sind transgene Pflanzen mit erhöhtem Stärkegehalt oder veränderter Qualität der Stärke oder solche mit anderer Fettsäurezusammensetzung des Ernteguts bzw. erhöhtem Vitamingehalt oder energetischer Eigenschaften bekannt. Gleichermaßen können die Wirkstoffe aufgrund ihrer herbiziden und pflanzenwachstumsregulatorischen Eigenschaften auch zur Bekämpfung von Schadpflanzen in Kulturen von bekannten oder noch zu entwickelnden durch Mutantenselektion erhaltenen Pflanzen eingesetzt werden, sowie aus Kreuzungen von mutagenen und transgenen Pflanzen.

Allgemein bekannte Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z.B. EP-A-0221044, EP-A-0131624). Beschrieben wurden beispielsweise in mehreren Fällen

- gentechnische Veränderungen von Kulturpflanzen zwecks Modifikation der in den Pflanzen synthetisierten Stärke (z.B. WO 92/11376, WO 92/14827, WO 91/19806),
- transgene Kulturpflanzen, welche Resistenzen gegen Herbizide aufweisen, beispielsweise gegen Sulfonylharnstoffe (EP-A-0257993, US-A-5013659),
- transgene Kulturpflanzen, mit der Fähigkeit Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431). Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der obengenannten Standardverfahren können z.B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codierenden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z.B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106).

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der vorliegenden Erfindung ist weiterhin ein Verfahren zur selektiven Bekämpfung von unerwünschten Pflanzen, vorzugsweise in Pflanzenkulturen, insbesondere in Reiskulturen (gepflanzt oder gesät unter 'Upland'- oder 'Paddy'-Bedingungen mit Indica- und/oder Japonica-Arten sowie Hybriden/Mutanten/GMOs), das dadurch gekennzeichnet ist, dass die Herbizide als Komponenten (A) und (B) der erfindungsgemäßen Herbizid-Kombinationen auf die Pflanzen (z.B. Schadpflanzen wie mono- oder dikotyle Unkräuter, Ungräser, Cyperaceen oder unerwünschte Kulturpflanzen), das Saatgut (z.B. Körner, Samen oder vegetative Vermehrungsorgane wie Knollen oder Sprossteile mit Knospen) oder die Fläche, auf der die Pflanzen wachsen (z.B. die Anbaufläche, die auch von Wasser bedeckt sein kann), ausgebracht werden, z.B. gemeinsam oder getrennt. Dabei können eines oder mehrere Herbizide (A) vor, nach oder gleichzeitig mit dem oder den Herbizid(en) (B) auf die Pflanzen, das Saatgut oder die Fläche, auf der die Pflanzen wachsen (z.B. die Anbaufläche), appliziert werden.

Unter unerwünschten Pflanzen sind alle Pflanzen zu verstehen, die an Orten wachsen, wo sie unerwünscht sind. Dies können z.B. Schadpflanzen (z.B. mono- oder dikotyle Unkräuter, Ungräser, Cyperaceen oder unerwünschte Kulturpflanzen) sein, z.B. auch solche, die gegen bestimmte herbizide Wirkstoffe wie Glyphosate, Glufosinate, Atrazin, Imidazolinon-Herbizide, Sulfonylharnstoffe, (Hetero-)aryloxyaryloxyalkylcarbonsäuren bzw. -phenoxyalkylcarbonsäuren (sog. 'Fops'), Cyclohexanedionoxime (sog. 'Dims') oder Auxininhibitoren resistent sind.

Die erfindungsgemäßen Herbizid-Kombinationen werden selektiv zur Bekämpfung unerwünschten Pflanzenwuchses eingesetzt werden, z.B. in Pflanzenkulturen wie Ackerbaukulturen z.B. monokotylen Ackerbaukulturen wie Getreide (z.B. Weizen, Gerste, Roggen, Hafer, Reis, Mais, Hirse) oder dikotylen Ackerbaukulturen wie Zuckerrübe, Zuckerrohr, Raps, Baumwolle, Sonnenblumen und Leguminosen z.B. der Gattungen Glycine (z.B. Glycine max. (Soja) wie nicht-transgene Glycine max. (z.B. konventionelle Sorten wie STS-Sorten) oder transgene Glycine max. (z.B. RR-Soja oder LL-Soja) und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel, in Obstanbauanlagen (Plantagenkulturen), Grün-, Rasen- und Weideflächen oder auf Nicht-Kulturflächen (z.B. Plätzen von Wohn- und Industrieanlagen, Gleisanlagen), insbesondere in Reiskulturen (gepflanzt oder gesät unter'Upland'- oder 'Paddy'-Bedingungen mit Indica- und/oder Japonica-Arten sowie Hybriden/Mutanten/GMOs). Dabei erfolgt die Applikation sowohl vor dem Auflaufen der Schadpflanzen als auch auf die aufgelaufenen Schadpflanzen (z.B. Unkräuter, Ungräser, Cyperaceen oder unerwünschte Kulturpflanzen) unabhängig vom Stadium der ausgesäten/ausgepflanzten Kultur.

Gegenstand der Erfindung ist auch die Verwendung der erfindungsgemäßen Herbizid-Kombinationen zur selektiven Bekämpfung von unerwünschtem Pflanzenwuchs, vorzugsweise in Pflanzenkulturen, insbesondere in Reiskulturen (gepflanzt oder gesät unter 'Upland'- oder 'Paddy'-Bedingungen mit Indica- und/oder Japonica-Arten sowie Hybriden/Mutanten/GMOs).

Die erfindungsgemäßen Herbizid-Kombinationen können nach bekannten Verfahren z.B. als Mischformulierungen der Einzelkomponenten, gegebenenfalls mit weiteren Wirkstoffen, Zusatzstoffen und/oder üblichen Formulierungshilfsmitteln hergestellt werden, die dann in üblicher Weise mit Wasser verdünnt zur Verwendung gebracht werden, oder als sogenannte Tankmischungen durch gemeinsame Verdünnung der getrennt formulierten oder partiell getrennt formulierten Komponenten mit Wasser hergestellt werden. Ebenfalls möglich ist die zeitlich versetzte Verwendung (Splitapplikation, Splitting) der getrennt formulierten oder partiell getrennt formulierten Einzelkomponenten. Möglich ist auch die Verwendung der Herbizide oder der Herbizid-Kombinationen in mehreren Portionen (Sequenzanwendung), z.B. nach Anwendungen als Saatgutbehandlung oder Vorsaat(pflanz)-Behandlung oder im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe Verwendung der Wirkstoffe der jeweiligen Kombination, besonders bevorzugt die gemeinsame Verwendung.

Die Herbizide (A) und (B) können gemeinsam oder getrennt in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen. Zu nennen wären auch spezifische Formulierungen für den Reisanbau, wie z.B. Streu-Granulate, "Jumbo"-Granulate, "Floating granules", "Floating"-Suspoemulsionen, die über "Shaker-Bottles" angewandt werden und über das Anstauwasser gelöst und verteilt werden. Die Formulierungen können die üblichen Hilfs- und Zusatzstoffe enthalten.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel könne z.B. auch organische Lösungsmittel als Hilfslösungsmittel verwendet werden. Als flüssige Lösungsmittel kommen im wesentlichen infrage: Aromaten, wie Xylol, Toluol, Alkylnaphthaline, chlorierte Aromaten oder chlorierte aliphatische Kohlenwasserstoffe, wie Chlorbenzole, Chlorethylene, oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid oder Dimethylsulfoxid, sowie Wasser.

Als feste Trägerstoffe kommen in Frage: z.B. Ammoniumsalze und natürliche Gesteinsmehle, wie Kaoline, Tonerden, Talkum, Kreide, Quarz, Attapulgit, Montmorillionit oder Diatomeenerde und synthetische Gesteinsmehle, wie hochdisperse Kieselsäure, Aluminiumoxid und Silikate; als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnuß-Schalen, Maiskolben und Tabakstengel; als Emulgier- und/oder schaumerzeugende Mittel kommen infrage: z.B. nicht ionogene und anionische Emulgatoren, wie Polyoxyethylen-Fettsäureester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen infrage: z.B. Ligninsulfitablaugen und Methylcellulose.

Es können in den Formulierungen Haftmittel wie Carboxymethylcellulose, natürliche und synthetische, pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Die herbizide Wirkung der erfindungsgemäßen Herbizid-Kombinationen kann z.B. gleichermaßen durch oberflächenaktive Substanzen verbessert werden, vorzugsweise durch Netzmittel aus der Reihe der Fettalkohol-Polyglykolether. Die Fettalkohol-Polyglykolether enthalten vorzugsweise 10 - 18 C-Atome im Fettalkoholrest und 2 - 20 Ethylenoxideinheiten im Polyglykoletherteil. Die Fettalkohol-Polyglykolether können nichtionisch vorliegen, oder ionisch, z.B. in Form von Fettalkohol-Polyglykolethersulfaten, vorliegen, die z.B. als Alkalisalze (z.B. Natrium- und Kaliumsalze) oder Ammoniumsalze, oder auch als Erdalkalisalze wie Magnesiumsalze verwendet werden, wie $C_{12}/C_{14}$-Fettalkohol-diglykolethersulfat-Natrium (Genapol® LRO, Clariant GmbH); siehe z.B. EP-A-0476555, EP-A-0048436, EP-A-0336151 oder US-A-4,400,196 sowie Proc. EWRS Symp. "Factors Affecting Herbicidal Activity and Selectivity", 227 - 232 (1988). Nichtionische Fettalkohol-Polyglykolether sind beispielsweise 2 - 20, vorzugsweise 3 - 15, Ethylenoxideinheiten enthaltende ($C_{10}$- $C_{18}$)-, vorzugsweise ($C_{10}$- $C_{14}$)-Fettalkohol-Polyglykolether (z.B. Isotridecylalkohol-Polyglykolether) z.B. aus der Genapol® X-Reihe wie Genapol® X-030, Genapol® X-060, Genapol® X-080 oder Genapol® X-150 (alle von Clariant GmbH).

Die vorliegende Erfindung umfasst ferner die Kombination der Komponenten (A) und (B) mit den vorgängig genannten Netzmitteln aus der Reihe der Fettalkohol-Polyglykolether, die vorzugsweise 10 - 18 C-Atome im Fettalkoholrest und 2 - 20 Ethylenoxideinheiten im Polyglykoletherteil enthalten und nichtionisch oder ionisch (z.B. als Fettalkoholpolyglykolethersulfate) vorliegen können. Bevorzugt sind $C_{12}/C_{14}$-Fettalkohol-diglykolethersulfat-Natrium (Genapol® LRO, Clariant GmbH) und Isotridecylalkohol-Polyglykolether, mit 3 - 15 Ethylenoxideneinheiten, z.B. aus der Genapol® X-Reihe wie Genapol® X-030, Genapol® X-060, Genapol® X-080 und Genapol® X-150 (alle von Clariant GmbH).

Weiterhin ist bekannt, dass Fettalkohol-Polyglykolether wie nichtionische oder ionische Fettalkohol-polyglykolether (z.B. Fettalkohol-Polyglykolethersulfate) auch als Penetrationshilfsmittel und Wirkungsverstärker für eine Reihe anderer Herbizide geeignet sind (siehe z.B. EP-A-0502014). Die vorliegende Erfindung umfasst daher ferner auch die Kombination mit geeigneten Penetrationshilfsmitteln und Wirkungsverstärkern, bevorzugt in kommerziell erhältlicher Form.

Die erfindungsgemäßen Herbizid-Kombinationen können auch zusammen mit Pflanzenölen verwendet werden. Unter dem Begriff Pflanzenöle werden Öle aus ölliefernden Pflanzenarten wie Sojaöl, Rapsöl, Maiskeimöl, Sonnenblumenöl, Baumwollsaatöl, Leinöl, Kokosöl, Palmöl, Distelöl oder Rhizinusöl, insbesondere Rapsöl verstanden, sowie deren Umesterungsprodukte, z.B. Alkylester wie Rapsölmethylester oder Rapsölethylester.

Die Pflanzenöle sind bevorzugt Ester von $C_{10}$-$C_{22}$-, vorzugsweise $C_{12}$-$C_{20}$-Fettsäuren. Die $C_{10}$-$C_{22}$-Fettsäureester sind beispielsweise Ester ungesättigter oder gesättigter $C_{10}$-$C_{22}$-Fettsäuren, insbesondere mit gerader Kohlenstoffatomzahl, z.B. Erucasäure, Laurinsäure, Palmitinsäure und insbesondere $C_{18}$-Fettsäuren wie Stearinsäure, Ölsäure, Linolsäure oder Linolensäure.

Beispiele für $C_{10}$-$C_{22}$-Fettsäure-Ester sind Ester, die durch Umsetzung von Glycerin oder Glykol mit den $C_{10}$-$C_{22}$-Fettsäuren erhalten werden, wie sie z.B. in Ölen aus ölliefernden Pflanzenarten enthalten sind, oder $C_1$-$C_{20}$-Alkyl-$C_{10}C_{22}$-Fettsäure-Ester, wie sie z.B. durch Umesterung der vorgenannten Glycerin- oder Glykol-$C_{10}$-$C_{22}$-Fettsäure-Ester mit $C_1$-$C_{20}$-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Als $C_1$-$C_{20}$-Alkyl-$C_{10}$-$C_{22}$-Fettsäure-Ester bevorzugt sind Methylester, Ethylester, Propylester, Butylester, 2-ethyl-hexylester und Dodecylester. Als Glykol- und Glycerin-$C_{10}$-$C_{22}$-Fettsäure-Ester bevorzugt sind die einheitlichen oder gemischten Glykolester und Glycerinester von $C_{10}$-$C_{22}$-Fettsäuren, insbesondere solcher Fettsäuren mit gerader Anzahl an Kohlenstoffatomen, z.B. Erucasäure, Laurinsäure, Palmitinsäure und insbesondere $C_{18}$-Fettsäuren wie Stearinsäure, Ölsäure, Linolsäure oder Linolensäure.

Die Pflanzenöle können in den erfindungsgemäßen herbiziden Mitteln z.B. in Form kommerziell erhältlicher ölhaltiger Formulierungszusatzstoffe, insbesondere solcher auf Basis von Rapsöl wie Hasten® (Victorian Chemical Company, Australien, nachfolgend Hasten genannt, Hauptbestandteil: Rapsölethylester), Actirob®B (Novance, Frankreich, nachfolgend ActirobB genannt, Hauptbestandteil: Rapsölmethylester), Rako-Binol® (Bayer AG, Deutschland, nachfolgend Rako-Binol genannt, Hauptbestandteil: Rapsöl), Renol® (Stefes, Deutschland, nachfolgend Renol genannt, Pflanzenölbestandteil: Rapsölmethylester) oder Stefes Mero® (Stefes, Deutschland, nachfolgend Mero genannt, Hauptbestandteil: Rapsölmethylester) enthalten sein.

Die vorliegende Erfindung umfasst in einer weiteren Ausführungsform auch die Kombinationen mit den vorgängig genannten Pflanzenölen wie Rapsöl, bevorzugt in Form kommerziell erhältlicher ölhaltiger Formulierungszusatzstoffe, insbesondere solcher auf Basis von Rapsöl wie Hasten® (Victorian Chemical Company, Australien, nachfolgend Hasten genannt, Hauptbestandteil: Rapsölethylester), Actirob®B (Novance, Frankreich, nachfolgend ActirobB genannt, Hauptbestandteil: Rapsölmethylester), Rako-Binol® (Bayer AG, Deutschland, nachfolgend Rako-Binol genannt, Hauptbestandteil: Rapsöl), Renol® (Stefes, Deutschland, nachfolgend Renol genannt, Pflanzenölbestandteil: Rapsölmethylester) oder Stefes Mero® (Stefes, Deutschland, nachfolgend Mero genannt, Hauptbestandteil: Rapsölmethylester).

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im Allgemeinen zwischen 0,1 und 95 Gewichtsprozent (Gew.-%) Wirkstoff, vorzugsweise zwischen 0,5 und 90 Gew.-%.

Die Herbizide (A) und (B) können als solche oder in ihren Formulierungen auch in Mischung mit anderen agrochemischen Wirkstoffen wie bekannten Herbiziden zur Bekämpfung von unerwünschtem Pflanzenwuchs, z.B. zur Unkrautbekämpfung oder zur Bekämpfung von unerwünschten Kulturpflanzen Verwendung finden, wobei z.B. Fertigformulierungen oder Tankmischungen möglich sind.

Auch Mischungen mit anderen bekannten Wirkstoffen wie Fungiziden, Insektiziden, Akariziden, Nematiziden, Safenern, Schutzstoffen gegen Vogelfraß, Pflanzennährstoffen und Bodenstrukturverbesserungsmitteln sind möglich.

Die Herbizide (A) und (B) können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Streuen.

Die Wirkstoffe können auf die Pflanzen (z.B. Schadpflanzen wie mono- oder dikotyle Unkräuter, Ungräser, Cyperaceen oder unerwünschte Kulturpflanzen), das Saatgut (z.B. Körner, Samen oder vegetative Vermehrungsorgane wie Knollen oder Sprossteile mit Knospen) oder die Anbaufläche (z.B. Ackerboden) ausgebracht werden, vorzugsweise auf die grünen Pflanzen und Pflanzenteile und gegebenenfalls zusätzlich auf den Ackerboden. Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt werden und die erhaltene Spritzbrühe ausgebracht wird.

Eine gemeinsame herbizide Formulierung der erfindungsgemäßen Kombination an Herbiziden (A) und (B) hat den Vorteil der leichteren Anwendbarkeit, wobei die Mengen der Komponenten bereits im optimalen Verhältnis zueinander eingestellt werden können. Außerdem können die Hilfsmittel in der Formulierung aufeinander optimal abgestimmt werden.

Biologische Beispiele

Unkrautwirkung im Nachauflauf

<u>Methode</u>

Samen beziehungsweise Rhizomstücke mono- und dikotyler Schad- und Nutzpflanzen wurden in, mit sandiger Lehmerde gefüllten Torftöpfen (4 cm Durchmesser) ausgelegt und anschließend mit Erde bedeckt. Die Töpfe wurden im Gewächshaus unter optimalen Bedingungen gehalten. Daneben wurden Schadpflanzen, die im Paddy-Reisanbau anzutreffen sind, in Töpfen kultiviert mit einem Wasserstand 2 cm oberhalb der Bodenoberfläche.

Etwa drei Wochen nach Beginn der Anzucht wurden die Versuchspflanzen im 2- bis 3-Blattstadium behandelt. Die Herbizide, formuliert als Pulver- oder Flüssigkonzentrate, wurden entweder allein oder in den erfindungsgemäßen Kombinationen mit einer Wasseraufwandmenge von umgerechnet 600 l/ha in unterschiedlichen Dosierungen auf die grünen Pflanzenteile gesprüht. Anschließend wurden die Töpfe zur weiteren Kultivierung der Pflanzen wieder unter optimalen Bedingungen im Gewächshaus gehalten.

Die visuelle Bewertung der herbiziden Effekte erfolgte in Intervallen bis zu 21 Tage nach der Behandlung. Die Bewertung erfolgte auf prozentualer Basis im Vergleich zu den unbehandelten Kontrollpflanzen: 0% = keinerlei herbizide Wirkung, 100% = vollständige herbizide Wirkung = komplette Abtötung.

Die prozentualen Daten aus den Behandlungen mit den Herbiziden allein (= Einzelapplikationen) und mit den erfindungsgemäßen Kombinationen (= Mischungen) wurden verwendet um Interaktionen zu berechnen nach der Methode von Colby. Wenn die beobachteten Wirkungswerte der Mischungen bereits die formale Summe der Werte zu den Versuchen mit Einzelapplikationen übertreffen, dann übertreffen sie den Erwartungswert nach Colby ebenfalls, der sich nach folgender Formel errechnet (vgl. S.R. Colby; in Weeds 15 (1967) S. 20 bis 22):

$$E = A + B - (A \times B / 100)$$

Dabei bedeuten:

A, B = Wirkung der Komponente A bzw. B in Prozent bei einer Dosierung von a bzw. b g ai/ha (= Gramm Aktivsubstanz pro Hektar).

E = Erwartungswert in % bei einer Dosierung von a+b g ai/ha.

Ergebnisse

Die erfindungsgemäßen Kombinationen von Herbiziden aus der Gruppe (A) mit Herbiziden aus der Gruppe (B) wurden an einem breiten Spektrum wichtiger Schadpflanzen (Ungräser/Unkräuter/Cyperaceen) und Nutzpflanzen getestet: *Triticum aestivum* (TRZAS), *Stellaria media* (STEME), *Lolium multiflorum* (LOLMU), *Veronica persica* (VERPE), *Alopecurus myosuroides* (ALOMY), *Matricaria inodora* (MATIN), *Brassica napus* (BRSNW), *Viola tricolor* (VIOTR), *Avena fatua* (AVEFA), *Amaranthus retroflexus* (AMARE), *Zea mays* (ZEAMX), *Pharbitis purpurea* (PHBPU), *Setaria viridis* (SETVI), *Fallopia* (ex *Polygonum*) *convolvulus* (POLCO), *Echinochloa crus-galli* (ECHCG), *Abuthilon theophrasti* (ABUTH), *Cyperus esculentus* (CYPES), *Oryza sativa* (ORYSA).

Besonders beachtenswert sind die in den folgenden Tabellen (Tab.) dargestellten Ergebnisse unter Verwendung folgender Legende:

**(1)** EPPO-Code (ehem. Bayer-Code) für behandelte Pflanze (siehe oben)
**(2)** Bewertungszeitpunkt: DAT (Tage nach Behandlung)
**(3)** Geprüfte Komponente A (Nennung der Kennziffer)
**(4)** Geprüfte Komponente B (Nennung der Kennziffer)
**(5)** Dosierung Komponente A [g ai/ha]
**(6)** Dosierung Komponente B [g ai/ha]
**(7)** % Wirkung gefunden
**(8)** Wert E (berechnet nach Colby; siehe oben)
**(9)** Kommentar: "SYNERGY" = Synergistische Interaktion (Wert E < % gefundene Wirkung); "SAFENING" = Safener-Wirkung auf Nutzpflanze (Wert E > % gefundene Wirkung)

**Tab. 1: (1)** TRZAS - **(2)** 10 DAT - **(3)** A-1 - **(4)** B3-1

| | **(5)** | **(6)** | **(7)** | **(8)** |
|---|---|---|---|---|
| **(3)** | 4 | - | 0 | - |
| **(4)** | - | 40 | 20 | - |
| **(3)+(4)** | 4 | 40 | 30 | 20 |
| **(9)** SYNERGY | | | | |

**Tab. 2: (1)** ALOMY - **(2)** 10 DAT - **(3)** A-1 - **(4)** B3-1

| | **(5)** | **(6)** | **(7)** | **(8)** |
|---|---|---|---|---|
| **(3)** | 12 | - | 40 | - |
| **(4)** | - | 40 | 40 | - |
| **(3)+(4)** | 12 | 40 | 70 | 58 |
| **(9)** SYNERGY | | | | |

**Tab. 3: (1)** ZEAMX - **(2)** 10 DAT - **(3)** A-1 - **(4)** B3-1

| | **(5)** | **(6)** | **(7)** | **(8)** |
|---|---|---|---|---|
| **(3)** | 12 | - | 0 | - |
| | 4 | - | 0 | - |
| **(4)** | - | 120 | 40 | - |
| | - | 40 | 40 | - |

(fortgesetzt)

| | **(5)** | **(6)** | **(7)** | **(8)** |
|---|---|---|---|---|
| **(3)+(4)** | 12 | 120 | 50 | 40 |
| | 12 | 40 | 70 | 40 |
| | 4 | 120 | 50 | 40 |
| | 4 | 40 | 50 | 40 |
| **(9)** SYNERGY | | | | |

**Tab. 4: (1)** LOLMU - **(2)** 21 DAT - **(3)** A-1 - **(4)** B3-1

| | **(5)** | **(6)** | **(7)** | **(8)** |
|---|---|---|---|---|
| **(3)** | 4 | - | 0 | - |
| **(4)** | - | 120 | 30 | - |
| **(3)+(4)** | 4 | 120 | 50 | 30 |
| **(9)** SYNERGY | | | | |

**Tab. 5: (1)** ALOMY - (2) 21 DAT - **(3)** A-1 - **(4)** B3-1

| | **(5)** | **(6)** | **(7)** | **(8)** |
|---|---|---|---|---|
| **(3)** | 12 | - | 50 | - |
| | 4 | - | 40 | - |
| **(4)** | - | 120 | 20 | - |
| | - | 40 | 10 | - |
| **(3)+(4)** | 12 | 120 | 80 | 60 |
| | 12 | 40 | 85 | 55 |
| | 4 | 120 | 75 | 52 |
| | 4 | 40 | 60 | 46 |
| **(9)** SYNERGY | | | | |

**Tab. 6: (1)** ZEAMX - **(2)** 21 DAT - **(3)** A-1 - **(4)** B3-1

| | **(5)** | **(6)** | **(7)** | **(8)** |
|---|---|---|---|---|
| **(3)** | 12 | - | 0 | - |
| | 4 | - | 0 | - |
| **(4)** | - | 40 | 30 | - |
| **(3)+(4)** | 12 | 40 | 50 | 30 |
| | 4 | 40 | 40 | 30 |
| **(9)** SYNERGY | | | | |

**Tab. 7: (1)** SETVI - **(2)** 21 DAT - **(3)** A-1 - **(4)** B3-1

| | **(5)** | **(6)** | **(7)** | **(8)** |
|---|---|---|---|---|
| **(3)** | 4 | - | 0 | - |
| **(4)** | - | 40 | 60 | - |
| **(3)+(4)** | 4 | 40 | 70 | 60 |
| **(9)** SYNERGY | | | | |

**Tab. 8: (1)** CYPES - **(2)** 21 DAT - **(3)** A-1 - **(4)** B3-1

| | **(5)** | **(6)** | **(7)** | **(8)** |
|---|---|---|---|---|
| **(3)** | 12 | - | 80 | - |
| | 4 | - | 80 | - |
| **(4)** | - | 120 | 0 | - |
| | - | 40 | 0 | - |
| **(3)+(4)** | 12 | 120 | 90 | 80 |
| | 12 | 40 | 90 | 80 |
| | 4 | 120 | 95 | 80 |
| | 4 | 40 | 90 | 80 |
| **(9)** SYNERGY | | | | |

**Tab. 9: (1)** ORYSA - **(2)** 21 DAT - **(3)** A-1 - **(4)** B3-1

| | **(5)** | **(6)** | **(7)** | **(8)** |
|---|---|---|---|---|
| **(3)** | 4 | - | 0 | - |
| **(4)** | - | 120 | 50 | - |
| | - | 40 | 30 | - |
| **(3)+(4)** | 4 | 120 | 20 | 50 |
| | 4 | 40 | 10 | 30 |
| **(9)** SAFENING | | | | |

**Tab. 10: (1)** ORYSA - **(2)** 21 DAT - **(3)** A-1 - **(4)** B3-1

| | **(5)** | **(6)** | **(7)** | **(8)** |
|---|---|---|---|---|
| **(3)** | 12 | - | 10 | - |
| **(4)** | - | 120 | 50 | - |
| **(3)+(4)** | 12 | 120 | 50 | 55 |
| **(9)** SAFENING | | | | |

**Tab. 11: (1)** TRZAS - **(2)** 10 DAT - **(3)** A-1 - **(4)** B3-4

| | **(5)** | **(6)** | **(7)** | **(8)** |
|---|---|---|---|---|
| **(3) (4)** | 12 | - | 0 | - |
| | - | 200 | 10 | - |
| **(3)+(4)** | 12 | 200 | 20 | 10 |
| **(9)** SYNERGY | | | | |

**Tab. 12: (1)** STEME - **(2)** 10 DAT - **(3)** A-1 - **(4)** B3-4

| | **(5)** | **(6)** | **(7)** | **(8)** |
|---|---|---|---|---|
| **(3)** | 12 | - | 70 | - |
| | 4 | - | 70 | - |
| **(4)** | - | 200 | 10 | - |
| **(3)+(4)** | 12 | 200 | 85 | 73 |
| | 4 | 200 | 85 | 73 |
| **(9)** SYNERGY | | | | |

**Tab. 13: (1)** MATIN - **(2)** 10 DAT - **(3)** A-1 - **(4)** B3-4

| | **(5)** | **(6)** | **(7)** | **(8)** |
|---|---|---|---|---|
| **(3)** | 4 | - | 60 | - |
| **(4)** | - | 600 | 0 | - |
| **(3)+(4)** | 4 | 600 | 70 | 60 |
| **(9)** SYNERGY | | | | |

**Tab. 14: (1)** MATIN - **(2)** 10 DAT - **(3)** A-1 - **(4)** B3-4

| | **(5)** | **(6)** | **(7)** | **(8)** |
|---|---|---|---|---|
| **(3)** | 12 | - | 70 | - |
| **(4)** | - | 600 | 0 | - |
| | - | 200 | 0 | - |
| **(3)+(4)** | 12 | 600 | 80 | 70 |
| | 12 | 200 | 80 | 70 |
| **(9)** SYNERGY | | | | |

**Tab. 15: (1)** VIOTR - **(2)** 10 DAT - **(3)** A-1 - **(4)** B3-4

| | **(5)** | **(6)** | **(7)** | **(8)** |
|---|---|---|---|---|
| **(3)** | 12 | - | 20 | - |
| | 4 | - | 20 | - |
| **(4)** | - | 600 | 0 | - |
| | - | 200 | 0 | - |

(fortgesetzt)

| | (5) | (6) | (7) | (8) |
|---|---|---|---|---|
| (3)+(4) | 12 | 600 | 60 | 20 |
| | 12 | 200 | 40 | 20 |
| | 4 | 600 | 30 | 20 |
| | 4 | 200 | 40 | 20 |
| (9) SYNERGY | | | | |

**Tab. 16: (1)** ZEAMX - **(2)** 10 DAT - **(3)** A-1 - **(4)** B3-4

| | (5) | (6) | (7) | (8) |
|---|---|---|---|---|
| (3) | 12 | - | 0 | - |
| | 4 | - | 0 | - |
| (4) | - | 200 | 0 | - |
| (3)+(4) | 12 | 200 | 20 | 0 |
| | 4 | 200 | 20 | 0 |
| (9) SYNERGY | | | | |

**Tab. 17: (1)** TRZAS - **(2)** 21 DAT - **(3)** A-1 - **(4)** B3-4

| | (5) | (6) | (7) | (8) |
|---|---|---|---|---|
| (3) | 12 | - | 0 | - |
| (4) | - | 200 | 0 | - |
| (3)+(4) | 12 | 200 | 10 | 0 |
| (9) SYNERGY | | | | |

**Tab. 18:** (1) MATIN - **(2)** 21 DAT - **(3)** A-1 - **(4)** B3-4

| | (5) | (6) | (7) | (8) |
|---|---|---|---|---|
| (3) | 12 | - | 60 | - |
| (4) | - | 600 | 20 | - |
| | - | 200 | 0 | - |
| (3)+(4) | 12 | 600 | 85 | 68 |
| | 12 | 200 | 85 | 60 |
| (9) SYNERGY | | | | |

**Tab. 19: (1)** AVEFA - (2) 21 DAT - **(3)** A-1 - **(4)** B3-4

| | (5) | (6) | (7) | (8) |
|---|---|---|---|---|
| (3) | 12 | - | 30 | - |
| | 4 | - | 10 | - |
| (4) | - | 200 | 0 | - |

(fortgesetzt)

| | (5) | (6) | (7) | (8) |
|---|---|---|---|---|
| **(3)+(4)** | 12 | 200 | 50 | 30 |
| | 4 | 200 | 30 | 10 |
| **(9)** SYNERGY | | | | |

**Tab. 20: (1)** ZEAMX - **(2)** 21 DAT - **(3)** A-1 - **(4)** B3-4

| | (5) | (6) | (7) | (8) |
|---|---|---|---|---|
| **(3)** | 12 | - | 0 | - |
| **(4)** | - | 600 | 10 | - |
| | - | 200 | 0 | - |
| **(3)+(4)** | 12 | 600 | 20 | 10 |
| | 12 | 200 | 10 | 0 |
| **(9)** SYNERGY | | | | |

**Tab. 21: (1)** PHBPU - **(2)** 21 DAT - **(3)** A-1 - **(4)** B3-4

| | (5) | (6) (7) | | (8) |
|---|---|---|---|---|
| **(3)** | 4 | - | 60 | - |
| **(4)** | - | 200 | 0 | - |
| **(3)+(4)** | 4 | 200 | 70 | 60 |
| **(9)** SYNERGY | | | | |

**Tab. 22: (1)** SETVI - **(2)** 21 DAT - **(3)** A-1 - **(4)** B3-4

| | (5) | (6) | (7) | (8) |
|---|---|---|---|---|
| **(3)** | 12 | - | 20 | - |
| **(4)** | - | 200 | 30 | - |
| **(3)+(4)** | 12 | 200 | 60 | 44 |
| **(9)** SYNERGY | | | | |

**Tab. 23: (1)** POLCO - (2) 21 DAT - **(3)** A-1 - **(4)** B3-4

| | (5) | (6) | (7) | (8) |
|---|---|---|---|---|
| **(3)** | 12 | - | 70 | - |
| | 4 | - | 75 | - |
| **(4)** | - | 600 | 0 | - |
| | - | 200 | 0 | - |

(fortgesetzt)

| | **(5)** | **(6)** | **(7)** | **(8)** |
|---|---|---|---|---|
| **(3)+(4)** | 12 | 600 | 95 | 70 |
| | 12 | 200 | 95 | 70 |
| | 4 | 600 | 95 | 75 |
| | 4 | 200 | 95 | 75 |
| **(9)** SYNERGY | | | | |

**Tab. 24: (1)** ABUTH - **(2)** 21 DAT - **(3)** A-1 - **(4)** B3-4

| | **(5)** | **(6)** | **(7)** | **(8)** |
|---|---|---|---|---|
| **(3)** | 4 | - | 85 | - |
| **(4)** | - | 600 | 0 | - |
| | - | 200 | 0 | - |
| **(3)+(4)** | 4 | 600 | 95 | 85 |
| | 4 | 200 | 95 | 85 |
| **(9)** SYNERGY | | | | |

**Tab. 25: (1)** CYPES - **(2)** 21 DAT - **(3)** A-1 - **(4)** B3-4

| | **(5)** | **(6)** | **(7)** | **(8)** |
|---|---|---|---|---|
| **(3)** | 12 | - | 80 | - |
| | 4 | - | 80 | - |
| **(4)** | - | 600 | 0 | - |
| | - | 200 | 0 | - |
| **(3)+(4)** | 12 | 600 | 90 | 80 |
| | 12 | 200 | 90 | 80 |
| | 4 | 600 | 90 | 80 |
| | 4 | 200 | 90 | 80 |
| **(9)** SYNERGY | | | | |

**Tab. 26: (1)** ORYSA - **(2)** 21 DAT - **(3)** A-1 - **(4)** B3-4

| | **(5)** | **(6)** | **(7)** | **(8)** |
|---|---|---|---|---|
| **(3)** | 12 | - | 10 | - |
| | 4 | - | 0 | - |
| **(4)** | - | 600 | 20 | - |
| **(3)+(4)** | 12 | 600 | 10 | 28 |
| | 4 | 600 | 10 | 20 |
| **(9)** SAFENING | | | | |

**Tab. 27: (1) LOLMU - (2)** 10 DAT - **(3)** A-1 - **(4)** B3-8

| | **(5)** | **(6)** | **(7)** | **(8)** |
|---|---|---|---|---|
| **(3)** | 12 | - | 10 | - |
| **(4)** | - | 700 | 0 | - |
| **(3)+(4)** | 12 | 700 | 30 | 10 |
| **(9)** SYNERGY | | | | |

**Tab. 28: (1) MATIN - (2)** 10 DAT - **(3)** A-1 - **(4)** B3-8

| | **(5)** | **(6)** | **(7)** | **(8)** |
|---|---|---|---|---|
| **(3)** | 4 | - | 60 | - |
| **(4)** | - | 2100 | 0 | - |
| | - | 700 | 0 | - |
| **(3)+(4)** | 4 | 2100 | 70 | 60 |
| | 4 | 700 | 70 | 60 |
| **(9)** SYNERGY | | | | |

**Tab. 29: (1)** AVEFA - **(2)** 10 DAT - **(3)** A-1 - **(4)** B3-8

| | **(5)** | **(6)** | **(7)** | **(8)** |
|---|---|---|---|---|
| **(3)** | 12 | - | 50 | - |
| **(4)** | - | 700 | 20 | - |
| **(3)+(4)** | 12 | 700 | 70 | 60 |
| **(9)** SYNERGY | | | | |

**Tab. 30: (1)** ZEAMX - **(2)** 10 DAT - **(3)** A-1 - **(4)** B3-8

| | **(5)** | **(6)** | **(7)** | **(8)** |
|---|---|---|---|---|
| **(3)** | 12 | - | 0 | - |
| | 4 | - | 0 | - |
| **(4)** | - | 2100 | 0 | - |
| | - | 700 | 0 | - |
| **(3)+(4)** | 12 | 2100 | 40 | 0 |
| | 12 | 700 | 50 | 0 |
| | 4 | 2100 | 30 | 0 |
| | 4 | 700 | 40 | 0 |
| **(9)** SYNERGY | | | | |

**Tab. 31: (1)** TRZAS - **(2)** 21 DAT - **(3)** A-1 - **(4)** B3-8

| | **(5)** | **(6)** | **(7)** | **(8)** |
|---|---|---|---|---|
| **(3)** | 4 | - | 0 | - |

(fortgesetzt)

| | (5) | (6) | (7) | (8) |
|---|---|---|---|---|
| **(4)** | - | 700 | 10 | - |
| **(3)+(4)** | 4 | 700 | 20 | 10 |
| **(9)** SYNERGY | | | | |

**Tab. 32: (1)** ALOMY - **(2)** 21 DAT - **(3)** A-1 - **(4)** B3-8

| | (5) | (6) | (7) | (8) |
|---|---|---|---|---|
| **(3)** | 12 | - | 50 | - |
| | 4 | - | 40 | - |
| **(4)** | - | 2100 | 20 | - |
| | - | 700 | 0 | - |
| **(3)+(4)** | 12 | 2100 | 70 | 60 |
| | 12 | 700 | 70 | 50 |
| | 4 | 2100 | 65 | 52 |
| | 4 | 700 | 70 | 40 |
| **(9)** SYNERGY | | | | |

**Tab. 33: (1)** MATIN - **(2)** 21 DAT - **(3)** A-1 - **(4)** B3-8

| | (5) | (6) | (7) | (8) |
|---|---|---|---|---|
| **(3)** | 12 | - | 60 | - |
| | 4 | - | 50 | - |
| **(4)** | - | 2100 | 0 | - |
| | - | 700 | 0 | - |
| **(3)+(4)** | 12 | 2100 | 90 | 60 |
| | 12 | 700 | 88 | 60 |
| | 4 | 2100 | 80 | 50 |
| | 4 | 700 | 80 | 50 |
| **(9)** SYNERGY | | | | |

**Tab. 34: (1)** VIOTR - **(2)** 21 DAT - **(3)** A-1 - **(4)** B3-8

| | (5) | (6) | (7) | (8) |
|---|---|---|---|---|
| **(3)** | 12 | - | 10 | - |
| **(4)** | - | 700 | 60 | - |
| **(3)+(4)** | 12 | 700 | 80 | 64 |
| **(9)** SYNERGY | | | | |

**Tab. 35: (1)** VIOTR - **(2)** 21 DAT - **(3)** A-1 - **(4)** B3-8

| | (5) | (6) | (7) | (8) |
|---|---|---|---|---|
| **(3)** | 4 | - | 0 | - |
| **(4)** | - | 2100 | 70 | - |
| **(3)+(4)** | 4 | 2100 | 80 | 70 |
| **(9)** SYNERGY | | | | |

**Tab. 36: (1)** AVEFA - **(2)** 21 DAT - **(3)** A-1 - **(4)** B3-8

| | (5) | (6) | (7) | (8) |
|---|---|---|---|---|
| **(3)** | 4 | - | 10 | - |
| **(4)** | - | 2100 | 10 | - |
| | - | 700 | 0 | - |
| **(3)+(4)** | 4 | 2100 | 30 | 19 |
| | 4 | 700 | 20 | 10 |
| **(9)** SYNERGY | | | | |

**Tab. 37: (1)** AVEFA - **(2)** 21 DAT - **(3)** A-1 - **(4)** B3-8

| | (5) | (6) | (7) | (8) |
|---|---|---|---|---|
| **(3)** | 12 | - | 30 | - |
| **(4)** | - | 700 | 0 | - |
| **(3)+(4)** | 12 | 700 | 60 | 30 |
| **(9)** SYNERGY | | | | |

**Tab. 38: (1)** ZEAMX - **(2)** 21 DAT - **(3)** A-1 - **(4)** B3-8

| | (5) | (6) | (7) | (8) |
|---|---|---|---|---|
| **(3)** | 12 | - | 0 | - |
| | 4 | - | 0 | - |
| **(4)** | - | 2100 | 0 | - |
| | - | 700 | 0 | - |
| **(3)+(4)** | 12 | 2100 | 20 | 0 |
| | 12 | 700 | 40 | 0 |
| | 4 | 2100 | 10 | 0 |
| | 4 | 700 | 30 | 0 |
| **(9)** SYNERGY | | | | |

**Tab. 39: (1)** PHBPU - **(2)** 21 DAT - **(3)** A-1 - **(4)** B3-8

| | (5) | (6) | (7) | (8) |
|---|---|---|---|---|
| **(3)** | 4 | - | 60 | - |

(fortgesetzt)

| | (5) | (6) | (7) | (8) |
|---|---|---|---|---|
| **(4)** | - | 2100 | 40 | - |
| **(3)+(4)** | 4 | 2100 | 88 | 76 |
| **(9)** SYNERGY | | | | |

**Tab. 40: (1)** SETVI - **(2)** 21 DAT - **(3)** A-1 - **(4)** B3-8

| | (5) | (6) | (7) | (8) |
|---|---|---|---|---|
| **(3)** | 12 | - | 20 | - |
| | 4 | - | 0 | - |
| **(4)** | - | 2100 | 80 | - |
| **(3)+(4)** | 12 | 2100 | 98 | 84 |
| | 4 | 2100 | 100 | 80 |
| **(9)** SYNERGY | | | | |

**Tab. 41: (1)** POLCO - **(2)** 21 DAT - **(3)** A-1 - **(4)** B3-8

| | (5) | (6) | (7) | (8) |
|---|---|---|---|---|
| **(3)** | 12 | - | 70 | - |
| **(4)** | - | 700 | 50 | - |
| **(3)+(4)** | 12 | 700 | 98 | 85 |
| **(9)** SYNERGY | | | | |

**Tab. 42: (1)** CYPES - **(2)** 21 DAT - **(3)** A-1 - **(4)** B3-8

| | (5) | (6) | (7) | (8) |
|---|---|---|---|---|
| **(3)** | 12 | - | 80 | - |
| | 4 | - | 80 | - |
| **(4)** | - | 2100 | 0 | - |
| | - | 700 | 0 | - |
| **(3)+(4)** | 12 | 2100 | 90 | 80 |
| | 12 | 700 | 90 | 80 |
| | 4 | 2100 | 90 | 80 |
| | 4 | 700 | 90 | 80 |
| **(9)** SYNERGY | | | | |

**Tab. 43: (1)** ORYSA - **(2)** 21 DAT - **(3)** A-1 - **(4)** B3-8

| | (5) | (6) | (7) | (8) |
|---|---|---|---|---|
| **(3)** | 12 | - | 10 | - |

(fortgesetzt)

| | (5) | (6) | (7) | (8) |
|---|---|---|---|---|
| **(4)** | - | 2100 | 0 | - |
| | - | 700 | 0 | - |
| **(3)+(4)** | 12 | 2100 | 0 | 10 |
| | 12 | 700 | 0 | 10 |
| **(9)** SAFENING | | | | |

**Tab. 44: (1)** TRZAS - **(2)** 10 DAT - **(3)** A-1 - **(4)** B4-3

| | (5) | (6) | (7) | (8) |
|---|---|---|---|---|
| **(3)** | 12 | - | 0 | - |
| | 4 | - | 0 | - |
| **(4)** | - | 400 | 0 | - |
| **(3)+(4)** | 12 | 400 | 30 | 0 |
| | 4 | 400 | 15 | 0 |
| **(9)** SYNERGY | | | | |

**Tab. 45: (1)** STEME - **(2)** 10 DAT - **(3)** A-1 - **(4)** B4-3

| | (5) | (6) | (7) | (8) |
|---|---|---|---|---|
| **(3)** | 12 | - | 70 | - |
| | 4 | - | 70 | - |
| **(4)** | - | 400 | 0 | - |
| **(3)+(4)** | 12 | 400 | 80 | 70 |
| | 4 | 400 | 80 | 70 |
| **(9)** SYNERGY | | | | |

**Tab. 46: (1)** LOLMU - **(2)** 10 DAT - **(3)** A-1 - **(4)** B4-3

| | (5) | (6) | (7) | (8) |
|---|---|---|---|---|
| **(3)** | 4 | - | 0 | - |
| **(4)** | - | 400 | 40 | - |
| **(3)+(4)** | 4 | 400 | 50 | 40 |
| **(9)** SYNERGY | | | | |

**Tab. 47: (1)** VERPE - **(2)** 10 DAT - **(3)** A-1 - **(4)** B4-3

| | (5) | (6) | (7) | (8) |
|---|---|---|---|---|
| **(3)** | 12 | - | 60 | - |
| **(4)** | - | 1200 | 0 | - |
| | - | 400 | 0 | - |

(fortgesetzt)

| | (5) | (6) | (7) | (8) |
|---|---|---|---|---|
| **(3)+(4)** | 12 | 1200 | 70 | 60 |
| | 12 | 400 | 70 | 60 |
| **(9)** SYNERGY | | | | |

**Tab. 48: (1)** ALOMY - **(2)** 10 DAT - **(3)** A-1 - **(4)** B4-3

| | (5) | (6) | (7) | (8) |
|---|---|---|---|---|
| **(3)** | 12 | - | 40 | - |
| | 4 | - | 40 | - |
| **(4)** | - | 400 | 20 | - |
| **(3)+(4)** | 12 | 400 | 70 | 52 |
| | 4 | 400 | 70 | 52 |
| **(9)** SYNERGY | | | | |

**Tab. 49: (1)** MATIN - **(2)** 10 DAT - **(3)** A-1 - **(4)** B4-3

| | (5) | (6) | (7) | (8) |
|---|---|---|---|---|
| **(3)** | 4 | - | 60 | - |
| **(4)** | - | 1200 | 20 | - |
| | - | 400 | 0 | - |
| **(3)+(4)** | 4 | 1200 | 80 | 68 |
| | 4 | 400 | 70 | 60 |
| **(9)** SYNERGY | | | | |

**Tab. 50: (1)** MATIN - **(2)** 10 DAT - **(3)** A-1 - **(4)** B4-3

| | (5) | (6) | (7) | (8) |
|---|---|---|---|---|
| **(3)** | 12 | - | 70 | - |
| **(4)** | - | 400 | 0 | - |
| **(3)+(4)** | 12 | 400 | 80 | 70 |
| **(9)** SYNERGY | | | | |

**Tab. 51: (1)** AMARE - **(2)** 10 DAT - **(3)** A-1 - **(4)** B4-3

| | (5) | (6) | (7) | (8) |
|---|---|---|---|---|
| **(3)** | 12 | - | 70 | - |
| | 4 | - | 70 | - |
| **(4)** | - | 1200 | 0 | - |
| | - | 400 | 0 | - |

(fortgesetzt)

| | (5) | (6) | (7) | (8) |
|---|---|---|---|---|
| **(3)+(4)** | 12 | 1200 | 80 | 70 |
| | 12 | 400 | 80 | 70 |
| | 4 | 1200 | 80 | 70 |
| | 4 | 400 | 80 | 70 |
| **(9)** SYNERGY | | | | |

**Tab. 52: (1)** ZEAMX - **(2)** 10 DAT - **(3)** A-1 - **(4)** B4-3

| | (5) | (6) | (7) | (8) |
|---|---|---|---|---|
| **(3)** | 12 | - | 0 | - |
| **(4)** | - | 1200 | 20 | - |
| **(3)+(4)** | 12 | 1200 | 50 | 20 |
| **(9)** SYNERGY | | | | |

**Tab. 53: (1)** PHBPU - **(2)** 10 DAT - **(3)** A-1 - **(4)** B4-3

| | (5) | (6) | (7) | (8) |
|---|---|---|---|---|
| **(3)** | 12 | - | 60 | - |
| | 4 | - | 60 | - |
| **(4)** | - | 1200 | 0 | - |
| | - | 400 | 0 | - |
| **(3)+(4)** | 12 | 1200 | 70 | 60 |
| | 12 | 400 | 70 | 60 |
| | 4 | 1200 | 70 | 60 |
| | 4 | 400 | 70 | 60 |
| **(9)** SYNERGY | | | | |

**Tab. 54: (1)** ORYSA - **(2)** 10 DAT - **(3)** A-1 - **(4)** B4-3

| | (5) | (6) | (7) | (8) |
|---|---|---|---|---|
| **(3)** | 4 | - | 10 | - |
| **(4)** | - | 400 | 0 | - |
| **(3)+(4)** | 4 | 400 | 0 | 10 |
| **(9)** SAFENING | | | | |

**Tab. 55: (1)** VERPE - **(2)** 21 DAT - **(3)** A-1 - **(4)** B4-3

| | (5) | (6) | (7) | (8) |
|---|---|---|---|---|
| **(3)** | 12 | - | 40 | - |
| **(4)** | - | 1200 | 20 | - |

(fortgesetzt)

| | (5) | (6) | (7) | (8) |
|---|---|---|---|---|
| **(3)+(4)** | 12 | 1200 | 70 | 52 |
| **(9)** SYNERGY | | | | |

**Tab. 56: (1)** ALOMY - **(2)** 21 DAT - **(3)** A-1 - **(4)** B4-3

| | (5) | (6) | (7) | (8) |
|---|---|---|---|---|
| **(3)** | 4 | - | 40 | - |
| **(4)** | - | 1200 | 50 | - |
| | - | 400 | 0 | - |
| **(3)+(4)** | 4 | 1200 | 80 | 75 |
| | 4 | 400 | 50 | 50 |
| **(9)** SYNERGY | | | | |

**Tab. 57: (1)** ALOMY - **(2)** 21 DAT - **(3)** A-1 - **(4)** B4-3

| | (5) | (6) | (7) | (8) |
|---|---|---|---|---|
| **(3)** | 12 | - | 50 | - |
| **(4)** | - | 400 | 0 | - |
| **(3)+(4)** | 12 | 400 | 80 | 50 |
| **(9)** SYNERGY | | | | |

**Tab. 58: (1)** MATIN - **(2)** 21 DAT - **(3)** A-1 - **(4)** B4-3

| | (5) | (6) | (7) | (8) |
|---|---|---|---|---|
| **(3)** | 12 | - | 60 | - |
| | 4 | - | 50 | - |
| **(4)** | - | 1200 | 40 | - |
| | - | 400 | 0 | - |
| **(3)+(4)** | 12 | 1200 | 95 | 76 |
| | 12 | 400 | 95 | 60 |
| | 4 | 1200 | 95 | 70 |
| | 4 | 400 | 70 | 50 |
| **(9)** SYNERGY | | | | |

**Tab. 59: (1)** AVEFA - **(2)** 21 DAT - **(3)** A-1 - **(4)** B4-3

| | (5) | (6) | (7) | (8) |
|---|---|---|---|---|
| **(3)** | 12 | - | 30 | - |
| **(4)** | - | 1200 | 50 | - |

(fortgesetzt)

| | (5) | (6) | (7) | (8) |
|---|---|---|---|---|
| **(3)+(4)** | 12 | 1200 | 80 | 65 |
| **(9)** SYNERGY | | | | |

**Tab. 60: (1)** ZEAMX - **(2)** 21 DAT - **(3)** A-1 - **(4)** B4-3

| | (5) | (6) | (7) | (8) |
|---|---|---|---|---|
| **(3)** | 12 | - | 0 | - |
| **(4)** | - | 1200 | 0 | - |
| **(3)+(4)** | 12 | 1200 | 50 | 0 |
| **(9)** SYNERGY | | | | |

**Tab. 61: (1)** PHBPU - **(2)** 21 DAT - **(3)** A-1 - **(4)** B4-3

| | (5) | (6) | (7) | (8) |
|---|---|---|---|---|
| **(3)** | 12 | - | 65 | - |
| | 4 | - | 60 | - |
| **(4)** | - | 1200 | 0 | - |
| | - | 400 | 0 | - |
| **(3)+(4)** | 12 | 1200 | 80 | 65 |
| | 12 | 400 | 80 | 65 |
| | 4 | 1200 | 80 | 60 |
| | 4 | 400 | 80 | 60 |
| **(9)** SYNERGY | | | | |

**Tab. 62: (1)** SETVI - **(2)** 21 DAT - **(3)** A-1 - **(4)** B4-3

| | (5) | (6) | (7) | (8) |
|---|---|---|---|---|
| **(3)** | 12 | - | 20 | - |
| **(4)** | - | 400 | 0 | - |
| **(3)+(4)** | 12 | 400 | 30 | 20 |
| **(9)** SYNERGY | | | | |

**Tab. 63: (1)** POLCO - **(2)** 21 DAT - **(3)** A-1 - **(4)** B4-3

| | (5) | (6) | (7) | (8) |
|---|---|---|---|---|
| **(3)** | 12 | - | 70 | - |
| **(4)** | - | 1200 | 0 | - |
| | - | 400 | 0 | - |

(fortgesetzt)

| | (5) | (6) | (7) | (8) |
|---|---|---|---|---|
| **(3)+(4)** | 12 | 1200 | 80 | 70 |
| | 12 | 400 | 80 | 70 |
| **(9)** SYNERGY | | | | |

**Tab. 64: (1)** ABUTH - **(2)** 21 DAT - **(3)** A-1 - **(4)** B4-3

| | (5) | (6) | (7) | (8) |
|---|---|---|---|---|
| **(3)** | 12 | - | 85 | - |
| **(4)** | - | 400 | 0 | - |
| **(3)+(4)** | 12 | 400 | 95 | 85 |
| **(9)** SYNERGY | | | | |

**Tab. 65: (1)** TRZAS - **(2)** 10 DAT - **(3)** A-1 - **(4)** B4-8

| | (5) | (6) | (7) | (8) |
|---|---|---|---|---|
| **(3)** | 4 | - | 0 | - |
| **(4)** | - | 300 | 10 | - |
| **(3)+(4)** | 4 | 300 | 20 | 10 |
| **(9)** SYNERGY | | | | |

**Tab. 66: (1)** TRZAS - **(2)** 10 DAT - **(3)** A-1 - **(4)** B4-8

| | (5) | (6) | (7) | (8) |
|---|---|---|---|---|
| **(3)** | 12 | - | 0 | - |
| **(4)** | - | 300 | 10 | - |
| | - | 100 | 0 | - |
| **(3)+(4)** | 12 | 300 | 20 | 10 |
| | 12 | 100 | 10 | 0 |
| **(9)** SYNERGY | | | | |

**Tab. 67: (1)** STEME - **(2)** 10 DAT - **(3)** A-1 - **(4)** B4-8

| | (5) | (6) | (7) | (8) |
|---|---|---|---|---|
| **(3)** | 12 | - | 70 | - |
| | 4 | - | 70 | - |
| **(4)** | - | 300 | 10 | - |
| | - | 100 | 10 | - |

(fortgesetzt)

| | **(5)** | **(6)** | **(7)** | **(8)** |
|---|---|---|---|---|
| **(3)+(4)** | 12 | 300 | 85 | 73 |
| | 12 | 100 | 85 | 73 |
| | 4 | 300 | 85 | 73 |
| | 4 | 100 | 85 | 73 |
| **(9)** SYNERGY | | | | |

**Tab. 68: (1)** VERPE - **(2)** 10 DAT - **(3)** A-1 - **(4)** B4-8

| | **(5)** | **(6)** | **(7)** | **(8)** |
|---|---|---|---|---|
| **(3)** | 12 | - | 60 | - |
| **(4)** | - | 300 | 0 | - |
| | - | 100 | 0 | - |
| **(3)+(4)** | 12 | 300 | 70 | 60 |
| | 12 | 100 | 70 | 60 |
| **(9)** SYNERGY | | | | |

**Tab. 69: (1)** ALOMY - **(2)** 10 DAT - **(3)** A-1 - **(4)** B4-8

| | **(5)** | **(6)** | **(7)** | **(8)** |
|---|---|---|---|---|
| **(3)** | 12 | - | 40 | - |
| **(4)** | - | 100 | 10 | - |
| **(3)+(4)** | 12 | 100 | 60 | 46 |
| **(9)** SYNERGY | | | | |

**Tab. 70: (1)** MATIN - **(2)** 10 DAT - **(3)** A-1 - **(4)** B4-8

| | **(5)** | **(6)** | **(7)** | **(8)** |
|---|---|---|---|---|
| **(3)** | 4 | - | 60 | - |
| **(4)** | - | 100 | 0 | - |
| **(3)+(4)** | 4 | 100 | 70 | 60 |
| **(9)** SYNERGY | | | | |

**Tab. 71: (1)** AVEFA - **(2)** 10 DAT - **(3)** A-1 - **(4)** B4-8

| | **(5)** | **(6)** | **(7)** | **(8)** |
|---|---|---|---|---|
| **(3)** | 12 | - | 50 | - |
| **(4)** | - | 100 | 0 | - |
| **(3)+(4)** | 12 | 100 | 60 | 50 |
| **(9)** SYNERGY | | | | |

**Tab. 72: (1)** ZEAMX - **(2)** 10 DAT - **(3)** A-1 - **(4)** B4-8

| | **(5)** | **(6)** | **(7)** | **(8)** |
|---|---|---|---|---|
| **(3)** | 4 | - | 0 | - |
| **(4)** | - | 300 | 20 | - |
| **(3)+(4)** | 4 | 300 | 30 | 20 |
| **(9)** SYNERGY | | | | |

**Tab. 73: (1)** ZEAMX - **(2)** 10 DAT - **(3)** A-1 - **(4)** B4-8

| | **(5)** | **(6)** | **(7)** | **(8)** |
|---|---|---|---|---|
| **(3)** | 12 | - | 0 | - |
| **(4)** | - | 300 | 20 | - |
| | - | 100 | 20 | - |
| **(3)+(4)** | 12 | 300 | 30 | 20 |
| | 12 | 100 | 40 | 20 |
| **(9)** SYNERGY | | | | |

**Tab. 74: (1)** VERPE - **(2)** 21 DAT - **(3)** A-1 - **(4)** B4-8

| | **(5)** | **(6)** | **(7)** | **(8)** |
|---|---|---|---|---|
| **(3)** | 12 | - | 40 | - |
| | 4 | - | 30 | - |
| **(4)** | - | 300 | 0 | - |
| | - | 100 | 0 | - |
| **(3)+(4)** | 12 | 300 | 60 | 40 |
| | 12 | 100 | 60 | 40 |
| | 4 | 300 | 40 | 30 |
| | 4 | 100 | 40 | 30 |
| **(9)** SYNERGY | | | | |

**Tab. 75: (1)** ALOMY - **(2)** 21 DAT - **(3)** A-1 - **(4)** B4-8

| | **(5)** | **(6)** | **(7)** | **(8)** |
|---|---|---|---|---|
| **(3)** | 12 | - | 50 | - |
| | 4 | - | 40 | - |
| **(4)** | - | 300 | 20 | |
| | - | 100 | 0 | - |

(fortgesetzt)

| | (5) | (6) | (7) | (8) |
|---|---|---|---|---|
| (3)+(4) | 12 | 300 | 70 | 60 |
| | 12 | 100 | 88 | 50 |
| | 4 | 300 | 70 | 52 |
| | 4 | 100 | 60 | 40 |
| (9) SYNERGY | | | | |

**Tab. 76:** (1) MATIN - **(2)** 21 DAT - **(3)** A-1 - **(4)** B4-8

| | (5) | (6) | (7) | (8) |
|---|---|---|---|---|
| (3) | 12 | - | 60 | - |
| | 4 | - | 50 | - |
| (4) | - | 100 | 0 | - |
| (3)+(4) | 12 | 100 | 88 | 60 |
| | 4 | 100 | 80 | 50 |
| **(9) SYNERGY** | | | | |

**Tab. 77:** **(1)** VIOTR - **(2)** 21 DAT - **(3)** A-1 - **(4)** B4-8

| | (5) | (6) | (7) | (8) |
|---|---|---|---|---|
| (3) | 4 | - | 0 | - |
| (4) | - | 100 | 10 | - |
| (3)+(4) | 4 | 100 | 20 | 10 |
| (9) SYNERGY | | | | |

**Tab. 78:** **(1)** AVEFA - **(2)** 21 DAT - **(3)** A-1 - **(4)** B4-8

| | (5) | (6) | (7) | (8) |
|---|---|---|---|---|
| (3) | 4 | - | 10 | - |
| (4) | - | 300 | 30 | - |
| | - | 100 | 0 | - |
| (3)+(4) | 4 | 300 | 50 | 37 |
| | 4 | 100 | 30 | 10 |
| (9) SYNERGY | | | | |

**Tab. 79:** **(1)** AVEFA - **(2)** 21 DAT - **(3)** A-1 - **(4)** B4-8

| | (5) | (6) | (7) | (8) |
|---|---|---|---|---|
| (3) | 12 | - | 30 | - |
| (4) | - | 100 | 0 | - |

(fortgesetzt)

| | (5) | (6) | (7) | (8) |
|---|---|---|---|---|
| **(3)+(4)** | 12 | 100 | 50 | 30 |
| **(9)** SYNERGY | | | | |

**Tab. 80: (1)** AMARE - **(2)** 21 DAT - **(3)** A-1 - **(4)** B4-8

| | (5) | (6) | (7) | (8) |
|---|---|---|---|---|
| **(3)** | 12 | - | 75 | - |
| **(4)** | - | 300 | 20 | - |
| **(3)+(4)** | 12 | 300 | 90 | 80 |
| **(9)** SYNERGY | | | | |

**Tab. 81: (1)** ZEAMX - **(2)** 21 DAT - **(3)** A-1 - **(4)** B4-8

| | (5) | (6) | (7) | (8) |
|---|---|---|---|---|
| **(3)** | 12 | - | 0 | - |
| **(4)** | - | 100 | 0 | - |
| **(3)+(4)** | 12 | 100 | 10 | 0 |
| **(9)** SYNERGY | | | | |

**Tab. 82:** (1) PHBPU - **(2)** 21 DAT - **(3)** A-1 - **(4)** B4-8

| | (5) | (6) | (7) | (8) |
|---|---|---|---|---|
| **(3)** | 12 | - | 65 | - |
| | 4 | - | 60 | - |
| **(4)** | - | 300 | 0 | - |
| | - | 100 | 0 | - |
| **(3)+(4)** | 12 | 300 | 80 | 65 |
| | 12 | 100 | 80 | 65 |
| | 4 | 300 | 70 | 60 |
| | 4 | 100 | 70 | 60 |
| **(9)** SYNERGY | | | | |

**Tab. 83: (1)** SETVI - **(2)** 21 DAT - **(3)** A-1 - **(4)** B4-8

| | (5) | (6) | (7) | (8) |
|---|---|---|---|---|
| **(3)** | 12 | - | 20 | - |
| | 4 | - | 0 | - |
| **(4)** | - | 300 | 0 | - |
| | - | 100 | 0 | - |

(fortgesetzt)

| | (5) | (6) | (7) | (8) |
|---|---|---|---|---|
| **(3)+(4)** | 12 | 300 | 40 | 20 |
| | 12 | 100 | 50 | 20 |
| | 4 | 300 | 30 | 0 |
| | 4 | 100 | 20 | 0 |
| **(9) SYNERGY** | | | | |

**Tab. 84: (1)** POLCO - **(2)** 21 DAT - **(3)** A-1 - **(4)** B4-8

| | (5) | (6) | (7) | (8) |
|---|---|---|---|---|
| **(3)** | 12 | - | 70 | - |
| | 4 | - | 75 | - |
| **(4)** | - | 300 | 20 | - |
| | - | 100 | 0 | - |
| **(3)+(4)** | 12 | 300 | 95 | 76 |
| | 12 | 100 | 95 | 70 |
| | 4 | 300 | 95 | 80 |
| | 4 | 100 | 95 | 75 |
| **(9)** SYNERGY | | | | |

**Tab. 85: (1)** ABUTH - **(2)** 21 DAT - **(3)** A-1 - **(4)** B4-8

| | (5) | (6) | (7) | (8) |
|---|---|---|---|---|
| **(3)** | 12 | - | 85 | - |
| | 4 | - | 85 | - |
| **(4)** | - | 300 | 0 | - |
| | - | 100 | 0 | - |
| **(3)+(4)** | 12 | 300 | 95 | 85 |
| | 12 | 100 | 95 | 85 |
| | 4 | 300 | 95 | 85 |
| | 4 | 100 | 95 | 85 |
| **(9)** SYNERGY | | | | |

**Tab. 86: (1)** CYPES - **(2)** 21 DAT - **(3)** A-1 - **(4)** B4-8

| | (5) | (6) | (7) | (8) |
|---|---|---|---|---|
| **(3)** | 12 | - | 80 | - |
| **(4)** | - | 300 | 0 | - |
| | - | 100 | 0 | - |
| **(3)+(4)** | 12 | 300 | 90 | 80 |

(fortgesetzt)

| | (5) | (6) | (7) | (8) |
|---|---|---|---|---|
| | 12 | 100 | 90 | 80 |
| **(9)** SYNERGY | | | | |

**Tab. 87: (1)** ORYSA - **(2)** 21 DAT - **(3)** A-1 - **(4)** B4-8

| | (5) | (6) | (7) | (8) |
|---|---|---|---|---|
| **(3)** | 4 | - | 0 | - |
| **(4)** | - | 300 | 20 | - |
| | - | 100 | 10 | - |
| **(3)+(4)** | 4 | 300 | 10 | 20 |
| | 4 | 100 | 0 | 10 |
| **(9)** SAFENING | | | | |

**Tab. 88: (1)** ORYSA - **(2)** 21 DAT - **(3)** A-1 - **(4)** B4-8

| | (5) | (6) | (7) | (8) |
|---|---|---|---|---|
| **(3)** | 12 | - | 10 | - |
| **(4)** | - | 300 | 20 | - |
| **(3)+(4)** | 12 | 300 | 10 | 28 |
| **(9)** SAFENING | | | | |

**Tab. 89: (1)** TRZAS - **(2)** 10 DAT - **(3)** A-1 - **(4)** B6-7

| | (5) | (6) | (7) | (8) |
|---|---|---|---|---|
| **(3)** | 12 | - | 0 | - |
| **(4)** | - | 900 | 10 | - |
| | - | 300 | 0 | - |
| **(3)+(4)** | 12 | 900 | 20 | 10 |
| | 12 | 300 | 15 | 0 |
| **(9)** SYNERGY | | | | |

**Tab. 90: (1)** STEME - **(2)** 10 DAT - **(3)** A-1 - **(4)** B6-7

| | (5) | (6) | (7) | (8) |
|---|---|---|---|---|
| **(3)** | 12 | - | 70 | - |
| | 4 | - | 70 | - |
| **(4)** | - | 900 | 0 | - |
| | - | 300 | 0 | - |

(fortgesetzt)

| | (5) | (6) | (7) | (8) |
|---|---|---|---|---|
| **(3)+(4)** | 12 | 900 | 80 | 70 |
| | 12 | 300 | 80 | 70 |
| | 4 | 900 | 80 | 70 |
| | 4 | 300 | 80 | 70 |
| **(9) SYNERGY** | | | | |

**Tab. 91: (1)** LOLMU - (2) 10 DAT - **(3)** A-1 - **(4)** B6-7

| | (5) | (6) | (7) | (8) |
|---|---|---|---|---|
| **(3)** | 12 | - | 10 | - |
| **(4)** | - | 900 | 20 | - |
| **(3)+(4)** | 12 | 900 | 40 | 28 |
| **(9)** SYNERGY | | | | |

**Tab. 92: (1)** VERPE - **(2)** 10 DAT - **(3)** A-1 - **(4)** B6-7

| | (5) | (6) | (7) | (8) |
|---|---|---|---|---|
| **(3)** | 12 | - | 60 | - |
| **(4)** | - | 900 | 0 | - |
| **(3)+(4)** | 12 | 900 | 70 | 60 |
| **(9)** SYNERGY | | | | |

**Tab. 93: (1)** MATIN - **(2)** 10 DAT - **(3)** A-1 - **(4)** B6-7

| | (5) | (6) | (7) | (8) |
|---|---|---|---|---|
| **(3)** | 4 | - | 60 | - |
| **(4)** | - | 900 | 20 | - |
| **(3)+(4)** | 4 | 900 | 80 | 68 |
| **(9) SYNERGY** | | | | |

**Tab. 94:** (1) AMARE - (2) 21 DAT - **(3)** A-1 - **(4)** B6-7

| | (5) | (6) | (7) (8) | |
|---|---|---|---|---|
| **(3)** | 4 | - | 70 | - |
| **(4)** | - | 900 | 0 | - |
| **(3)+(4)** | 4 | 900 | 80 | 70 |
| **(9)** SYNERGY | | | | |

**Tab. 95: (1)** AMARE - **(2)** 10 DAT - **(3)** A-1 - **(4)** B6-7

| | **(5)** | **(6)** | **(7)** | **(8)** |
|---|---|---|---|---|
| **(3)** | 12 | - | 70 | - |
| **(4)** | - | 900 | 0 | - |
| | - | 300 | 0 | - |
| **(3)+(4)** | 12 | 900 | 80 | 70 |
| | 12 | 300 | 80 | 70 |
| **(9)** SYNERGY | | | | |

**Tab. 96: (1)** ZEAMX - (2) 10 DAT - **(3)** A-1 - **(4)** B6-7

| | **(5)** | **(6)** | **(7)** | **(8)** |
|---|---|---|---|---|
| **(3)** | 4 | - | 0 | - |
| **(4)** | - | 900 | 20 | - |
| **(3)+(4)** | 4 | 900 | 30 | 20 |
| **(9)** SYNERGY | | | | |

**Tab. 97: (1)** ZEAMX - **(2)** 10 DAT - **(3)** A-1 - **(4)** B6-7

| | **(5)** | **(6)** | **(7)** | **(8)** |
|---|---|---|---|---|
| **(3)** | 12 | - | 0 | - |
| **(4)** | - | 900 | 20 | - |
| | - | 300 | 10 | - |
| **(3)+(4)** | 12 | 900 | 40 | 20 |
| | 12 | 300 | 30 | 10 |
| **(9)** SYNERGY | | | | |

**Tab. 98: (1)** PHBPU - **(2)** 10 DAT - **(3)** A-1 - **(4)** B6-7

| | **(5)** | **(6)** | **(7)** | **(8)** |
|---|---|---|---|---|
| **(3)** | 12 | - | 60 | - |
| | 4 | - | 60 | - |
| **(4)** | - | 900 | 0 | - |
| | - | 300 | 0 | - |
| **(3)+(4)** | 12 | 900 | 70 | 60 |
| | 12 | 300 | 70 | 60 |
| | 4 | 900 | 70 | 60 |
| | 4 | 300 | 70 | 60 |
| **(9)** SYNERGY | | | | |

**Tab. 99:** (1) SETVI - (2) 10 DAT - **(3)** A-1 - **(4)** B6-7

| | (5) | (6) | (7) | (8) |
|---|---|---|---|---|
| **(3)** | 4 | - | 50 | - |
| **(4)** | - | 900 | 0 | - |
| | - | 300 | 0 | - |
| **(3)+(4)** | 4 | 900 | 60 | 50 |
| | 4 | 300 | 60 | 50 |
| **(9)** SYNERGY | | | | |

**Tab. 100: (1)** ABUTH - **(2)** 10 DAT-**(3)** A-1 - **(4)** B6-7

| | (5) | (6) | (7) | (8) |
|---|---|---|---|---|
| **(3)** | 12 | - | 70 | - |
| | 4 | - | 70 | - |
| **(4)** | - | 900 | 0 | - |
| | - | 300 | 0 | - |
| **(3)+(4)** | 12 | 900 | 80 | 70 |
| | 12 | 300 | 80 | 70 |
| | 4 | 900 | 80 | 70 |
| | 4 | 300 | 80 | 70 |
| **(9)** SYNERGY | | | | |

**Tab. 101: (1)** ORYSA - **(2)** 10 DAT - **(3)** A-1 - **(4)** B6-7

| | (5) | (6) | (7) | (8) |
|---|---|---|---|---|
| **(3)** | 4 | - | 10 | - |
| **(4)** | - | 300 | 0 | - |
| **(3)+(4)** | 4 | 300 | 0 | 10 |
| **(9)** SAFENING | | | | |

**Tab. 102: (1)** VERPE - **(2)** 21 DAT - **(3)** A-1 - **(4)** B6-7

| | (5) | (6) | (7) | (8) |
|---|---|---|---|---|
| **(3)** | 12 | - | 40 | - |
| | 4 | - | 30 | - |
| **(4)** | - | 300 | 0 | - |
| **(3)+(4)** | 12 | 300 | 70 | 40 |
| | 4 | 300 | 50 | 30 |
| **(9)** SYNERGY | | | | |

**Tab. 103: (1)** ALOMY - **(2)** 21 DAT - **(3)** A-1 - **(4)** B6-7

| | (5) | (6) | (7) | (8) |
|---|---|---|---|---|
| (3) | 4 | - | 40 | - |
| (4) | - | 300 | 0 | - |
| (3)+(4) | 4 | 300 | 50 | 40 |
| (9) SYNERGY | | | | |

**Tab. 104: (1)** ALOMY - **(2)** 21 DAT - **(3)** A-1 - **(4)** B6-7

| | (5) | (6) | (7) | (8) |
|---|---|---|---|---|
| (3) | 12 | - | 50 | - |
| (4) | - | 900 | 10 | - |
| | - | 300 | 0 | - |
| (3)+(4) | 12 | 900 | 90 | 55 |
| | 12 | 300 | 80 | 50 |
| (9) SYNERGY | | | | |

**Tab. 105: (1)** MATIN - **(2)** 21 DAT - **(3)** A-1 - **(4)** B6-7

| | (5) | (6) | (7) | (8) |
|---|---|---|---|---|
| (3) | 12 | - | 60 | - |
| | 4 | - | 50 | - |
| (4) | - | 900 | 30 | - |
| | - | 300 | 30 | - |
| (3)+(4) | 12 | 900 | 95 | 72 |
| | 12 | 300 | 98 | 72 |
| | 4 | 900 | 95 | 65 |
| | 4 | 300 | 90 | 65 |
| (9) SYNERGY | | | | |

**Tab. 106: (1)** AVEFA - **(2)** 21 DAT - **(3)** A-1 - **(4)** B6-7

| | (5) | (6) | (7) | (8) |
|---|---|---|---|---|
| (3) | 4 | - | 10 | - |
| (4) | - | 300 | 0 | - |
| (3)+(4) | 4 | 300 | 20 | 10 |
| (9) SYNERGY | | | | |

**Tab. 107: (1)** AMARE - **(2)** 21 DAT - **(3)** A-1 - **(4)** B6-7

| | **(5)** | **(6)** | **(7)** | **(8)** |
|---|---|---|---|---|
| **(3)** | 12 | - | 75 | - |
| | 4 | - | 70 | - |
| **(4)** | - | 900 | 0 | - |
| | - | 300 | 0 | - |
| **(3)+(4)** | 12 | 900 | 90 | 75 |
| | 12 | 300 | 90 | 75 |
| | 4 | 900 | 80 | 70 |
| | 4 | 300 | 80 | 70 |
| **(9)** SYNERGY | | | | |

**Tab. 108: (1)** PHBPU - (2) 21 DAT - **(3)** A-1 - **(4)** B6-7

| | **(5)** | **(6)** | **(7)** | **(8)** |
|---|---|---|---|---|
| **(3)** | 12 | - | 65 | - |
| | 4 | - | 60 | - |
| **(4)** | - | 900 | 0 | - |
| | - | 300 | 0 | - |
| **(3)+(4)** | 12 | 900 | 80 | 65 |
| | 12 | 300 | 80 | 65 |
| | 4 | 900 | 70 | 60 |
| | 4 | 300 | 80 | 60 |
| **(9)** SYNERGY | | | | |

**Tab. 109: (1)** SETVI - **(2)** 21 DAT - **(3)** A-1 - **(4)** B6-7

| | **(5)** | **(6)** | **(7)** | **(8)** |
|---|---|---|---|---|
| **(3)** | 12 | - | 20 | - |
| | 4 | - | 0 | - |
| **(4)** | - | 900 | 0 | - |
| | - | 300 | 0 | - |
| **(3)+(4)** | 12 | 900 | 50 | 20 |
| | 12 | 300 | 50 | 20 |
| | 4 | 900 | 30 | 0 |
| | 4 | 300 | 30 | 0 |
| **(9)** SYNERGY | | | | |

**Tab. 110: (1)** POLCO - **(2)** 21 DAT - **(3)** A-1 - **(4)** B6-7

| | **(5)** | **(6)** | **(7)** | **(8)** |
|---|---|---|---|---|
| **(3)** | 12 | - | 70 | - |

(fortgesetzt)

| | (5) | (6) | (7) | (8) |
|---|---|---|---|---|
| **(4)** | - | 900 | 0 | - |
| | - | 300 | 0 | - |
| **(3)+(4)** | 12 | 900 | 80 | 70 |
| | 12 | 300 | 80 | 70 |
| **(9)** SYNERGY | | | | |

**Tab. 111: (1)** ECHCG - **(2)** 21 DAT-**(3)** A-1 - **(4)** B6-7

| | (5) | (6) | (7) | (8) |
|---|---|---|---|---|
| **(3)** | 4 | - | 85 | - |
| **(4)** | - | 900 | 0 | - |
| | - | 300 | 0 | - |
| **(3)+(4)** | 4 | 900 | 98 | 85 |
| | 4 | 300 | 98 | 85 |
| **(9)** SYNERGY | | | | |

**Tab. 112: (1)** ORYSA - **(2)** 21 DAT - **(3)** A-1 - **(4)** B6-7

| | (5) | (6) | (7) | (8) |
|---|---|---|---|---|
| **(3)** | 12 | - | 10 | - |
| | 4 | - | 0 | - |
| **(4)** | - | 900 | 10 | - |
| | - | 300 | 10 | - |
| **(3)+(4)** | 12 | 900 | 0 | 19 |
| | 12 | 300 | 0 | 19 |
| | 4 | 900 | 0 | 10 |
| | 4 | 300 | 0 | 10 |
| **(9)** SAFENING | | | | |

**Tab. 113: (1)** TRZAS - **(2)** 10 DAT - **(3)** A-1 - **(4)** B7-6

| | (5) | (6) | (7) | (8) |
|---|---|---|---|---|
| **(3)** | 12 | - | 0 | - |
| **(4)** | - | 7 | 0 | - |
| **(3)+(4)** | 12 | 7 | 10 | 0 |
| **(9)** SYNERGY | | | | |

**Tab. 114: (1)** LOLMU - **(2)** 10 DAT - **(3) A-1 - (4)** B7-6

| | **(5)** | **(6)** | **(7)** | **(8)** |
|---|---|---|---|---|
| **(3)** | 12 | - | 10 | - |
| **(4)** | - | 7 | 40 | - |
| **(3)+(4)** | 12 | 7 | 60 | 46 |
| **(9)** SYNERGY | | | | |

**Tab. 115: (1)** ZEAMX - **(2)** 10 DAT - **(3)** A-1 - **(4)** B7-6

| | **(5)** | **(6)** | **(7)** | **(8)** |
|---|---|---|---|---|
| **(3)** | 12 | - | 0 | - |
| | 4 | - | 0 | - |
| **(4)** | - | 21 | 0 | - |
| | - | 7 | 0 | - |
| **(3)+(4)** | 12 | 21 | 50 | 0 |
| | 12 | 7 | 20 | 0 |
| | 4 | 21 | 20 | 0 |
| | 4 | 7 | 10 | 0 |
| **(9)** SYNERGY | | | | |

**Tab. 116: (1)** TRZAS - **(2)** 21 DAT - **(3)** A-1 - **(4)** B7-6

| | **(5)** | **(6)** | **(7)** | **(8)** |
|---|---|---|---|---|
| **(3)** | 12 | - | 0 | - |
| | 4 | - | 0 | - |
| **(4)** | - | 21 | 0 | - |
| **(3)+(4)** | 12 | 21 | 10 | 0 |
| | 4 | 21 | 10 | 0 |
| **(9)** SYNERGY | | | | |

**Tab. 117: (1)** LOLMU - **(2)** 21 DAT - **(3)** A-1 - **(4)** B7-6

| | **(5)** | **(6)** | **(7)** | **(8)** |
|---|---|---|---|---|
| **(3)** | 12 | - | 10 | - |
| **(4)** | - | 7 | 10 | - |
| **(3)+(4)** | 12 | 7 | 30 | 19 |
| **(9)** SYNERGY | | | | |

**Tab. 118: (1)** VERPE - **(2)** 21 DAT - **(3)** A-1 - **(4)** B7-6

| | **(5)** | **(6)** | **(7)** | **(8)** |
|---|---|---|---|---|
| **(3)** | 12 | - | 40 | - |
| | 4 | - | 30 | - |
| **(4)** | - | 21 | 0 | - |
| | - | 7 | 0 | - |
| **(3)+(4)** | 12 | 21 | 80 | 40 |
| | 12 | 7 | 70 | 40 |
| | 4 | 21 | 60 | 30 |
| | 4 | 7 | 60 | 30 |
| **(9)** SYNERGY | | | | |

**Tab. 119: (1)** ALOMY - **(2)** 21 DAT - **(3)** A-1 - **(4)** B7-6

| | **(5)** | **(6)** | **(7)** | **(8)** |
|---|---|---|---|---|
| **(3)** | 12 | - | 50 | - |
| **(4)** | - | 7 | 20 | - |
| **(3)+(4)** | 12 | 7 | 80 | 60 |
| **(9)** SYNERGY | | | | |

**Tab. 120: (1)** SETVI - **(2)** 21 DAT - **(3)** A-1 - **(4)** B7-6

| | **(5)** | **(6)** | **(7)** | **(8)** |
|---|---|---|---|---|
| **(3)** | 12 | - | 20 | - |
| **(4)** | - | 21 | 0 | - |
| | - | 7 | 0 | - |
| **(3)+(4)** | 12 | 21 | 30 | 20 |
| | 12 | 7 | 30 | 20 |
| **(9)** SYNERGY | | | | |

**Tab. 121: (1)** CYPES - (2) 21 DAT - **(3)** A-1 - **(4)** B7-6

| | **(5)** | **(6)** | **(7)** | **(8)** |
|---|---|---|---|---|
| **(3)** | 4 | - | 80 | - |
| **(4)** | - | 21 | 0 | - |
| **(3)+(4)** | 4 | 21 | 90 | 80 |
| **(9)** SYNERGY | | | | |

**Tab. 122: (1)** ORYSA - **(2)** 21 DAT - **(3)** A-1 - **(4)** B7-6

| | **(5)** | **(6)** | **(7)** | **(8)** |
|---|---|---|---|---|
| **(3)** | 12 | - | 10 | - |

(fortgesetzt)

| | (5) | (6) | (7) | (8) |
|---|---|---|---|---|
| **(4)** | - | 7 | 0 | - |
| **(3)+(4)** | 12 | 7 | 0 | 10 |
| **(9)** SAFENING | | | | |

**Tab. 123: (1)** TRZAS - **(2)** 10 DAT - **(3)** A-1 - **(4)** B7-7

| | (5) | (6) | (7) | (8) |
|---|---|---|---|---|
| **(3)** | 4 | - | 0 | - |
| **(4)** | - | 18 | 0 | - |
| **(3)+(4)** | 4 | 18 | 10 | 0 |
| **(9)** SYNERGY | | | | |

**Tab. 124: (1)** TRZAS - **(2)** 10 DAT - **(3)** A-1 - **(4)** B7-7

| | (5) | (6) | (7) | (8) |
|---|---|---|---|---|
| **(3)** | 12 | - | 0 | - |
| **(4)** | - | 54 | 0 | - |
| | - | 18 | 0 | - |
| **(3)+(4)** | 12 | 54 | 10 | 0 |
| | 12 | 18 | 10 | 0 |
| **(9)** SYNERGY | | | | |

**Tab. 125: (1)** LOLMU - **(2)** 10 DAT - **(3)** A-1 - **(4)** B7-7

| | (5) | (6) | (7) | (8) |
|---|---|---|---|---|
| **(3)** | 12 | - | 10 | - |
| | 4 | - | 0 | - |
| **(4)** | - | 54 | 0 | - |
| | - | 18 | 0 | - |
| **(3)+(4)** | 12 | 54 | 30 | 10 |
| | 12 | 18 | 40 | 10 |
| | 4 | 54 | 30 | 0 |
| | 4 | 18 | 20 | 0 |
| **(9)** SYNERGY | | | | |

**Tab. 126: (1)** ALOMY - **(2)** 10 DAT - **(3)** A-1 - **(4)** B7-7

| | (5) | (6) | (7) | (8) |
|---|---|---|---|---|
| **(3)** | 12 | - | 40 | - |
| **(4)** | - | 54 | 30 | - |

(fortgesetzt)

| | (5) | (6) | (7) | (8) |
|---|---|---|---|---|
| (3)+(4) | 12 | 54 | 70 | 58 |
| (9) SYNERGY | | | | |

**Tab. 127: (1)** AVEFA - **(2)** 10 DAT - **(3)** A-1 - **(4)** B7-7

| | (5) | (6) | (7) | (8) |
|---|---|---|---|---|
| (3) | 4 | - | 40 | - |
| (4) | - | 54 | 30 | - |
| | - | 18 | 0 | - |
| (3)+(4) | 4 | 54 | 70 | 58 |
| | 4 | 18 | 60 | 40 |
| (9) SYNERGY | | | | |

**Tab. 128: (1)** AVEFA - **(2)** 10 DAT - **(3)** A-1 - **(4)** B7-7

| | (5) | (6) | (7) | (8) |
|---|---|---|---|---|
| (3) | 12 | - | 50 | - |
| (4) | - | 18 | 0 | - |
| (3)+(4) | 12 | 18 | 70 | 50 |
| (9) SYNERGY | | | | |

**Tab. 129: (1)** ECHCG - **(2)** 10 DAT-**(3)** A-1 - **(4)** B7-7

| | (5) | (6) | (7) | (8) |
|---|---|---|---|---|
| (3) | 12 | - | 70 | - |
| (4) | - | 54 | 0 | - |
| | - | 18 | 0 | - |
| (3)+(4) | 12 | 54 | 80 | 70 |
| | 12 | 18 | 80 | 70 |
| (9) SYNERGY | | | | |

**Tab. 130: (1)** CYPES - **(2)** 10 DAT - **(3)** A-1 - **(4)** B7-7

| | (5) | (6) | (7) | (8) |
|---|---|---|---|---|
| (3) | 12 | - | 70 | - |
| | 4 | - | 70 | - |
| (4) | - | 18 | 0 | - |

(fortgesetzt)

| | (5) | (6) | (7) | (8) |
|---|---|---|---|---|
| **(3)+(4)** | 12 | 18 | 80 | 70 |
| | 4 | 18 | 80 | 70 |
| **(9)** SYNERGY | | | | |

**Tab. 131: (1)** TRZAS - (2) 21 DAT - **(3)** A-1 - **(4)** B7-7

| | (5) | (6) | (7) | (8) |
|---|---|---|---|---|
| **(3)** | 4 | - | 0 | - |
| **(4)** | - | 54 | 0 | - |
| **(3)+(4)** | 4 | 54 | 10 | 0 |
| **(9)** SYNERGY | | | | |

**Tab. 132: (1)** TRZAS - **(2)** 21 DAT - **(3)** A-1 - **(4)** B7-7

| | (5) | (6) | (7) | (8) |
|---|---|---|---|---|
| **(3)** | 12 | - | 0 | - |
| **(4)** | - | 54 | 0 | - |
| | - | 18 | 0 | - |
| **(3)+(4)** | 12 | 54 | 20 | 0 |
| | 12 | 18 | 10 | 0 |
| **(9)** SYNERGY | | | | |

**Tab. 133: (1)** LOLMU - **(2)** 21 DAT - **(3)** A-1 - **(4)** B7-7

| | (5) | (6) | (7) | (8) |
|---|---|---|---|---|
| **(3)** | 12 | - | 10 | - |
| | 4 | - | 0 | - |
| **(4)** | - | 54 | 0 | - |
| | - | 18 | 0 | - |
| **(3)+(4)** | 12 | 54 | 30 | 10 |
| | 12 | 18 | 30 | 10 |
| | 4 | 54 | 10 | 0 |
| | 4 | 18 | 10 | 0 |
| **(9)** SYNERGY | | | | |

**Tab. 134: (1)** ALOMY - **(2)** 21 DAT - **(3)** A-1 - **(4)** B7-7

| | (5) | (6) | (7) | (8) |
|---|---|---|---|---|
| **(3)** | 4 | - | 40 | - |
| **(4)** | - | 54 | 40 | - |

(fortgesetzt)

| | (5) | (6) | (7) | (8) |
|---|---|---|---|---|
| **(3)+(4)** | 4 | 54 | 80 | 64 |
| **(9)** SYNERGY | | | | |

**Tab. 135: (1)** ALOMY - **(2)** 21 DAT - **(3)** A-1 - **(4)** B7-7

| | (5) | (6) | (7) | (8) |
|---|---|---|---|---|
| **(3)** | 12 | - | 50 | - |
| **(4)** | - | 54 | 40 | - |
| | - | 18 | 30 | - |
| **(3)+(4)** | 12 | 54 | 88 | 70 |
| | 12 | 18 | 88 | 65 |
| **(9)** SYNERGY | | | | |

**Tab. 136: (1)** AVEFA - **(2)** 21 DAT - **(3)** A-1 - **(4)** B7-7

| | (5) | (6) | (7) | (8) |
|---|---|---|---|---|
| **(3)** | 4 | - | 10 | - |
| **(4)** | - | 54 | 10 | - |
| | - | 18 | 0 | - |
| **(3)+(4)** | 4 | 54 | 30 | 19 |
| | 4 | 18 | 30 | 10 |
| **(9)** SYNERGY | | | | |

**Tab. 137: (1)** AVEFA - **(2)** 21 DAT - **(3)** A-1 - **(4)** B7-7

| | (5) | (6) | (7) | (8) |
|---|---|---|---|---|
| **(3)** | 12 | - | 30 | - |
| **(4)** | - | 18 | 0 | - |
| **(3)+(4)** | 12 | 18 | 40 | 30 |
| **(9)** SYNERGY | | | | |

**Tab. 138: (1)** SETVI - **(2)** 21 DAT - **(3)** A-1 - **(4)** B7-7

| | (5) | (6) | (7) | (8) |
|---|---|---|---|---|
| **(3)** | 12 | - | 20 | - |
| | 4 | - | 0 | - |
| **(4)** | - | 54 | 20 | - |
| | - | 18 | 20 | - |

(fortgesetzt)

| | (5) | (6) | (7) | (8) |
|---|---|---|---|---|
| (3)+(4) | 12 | 54 | 70 | 36 |
| | 12 | 18 | 60 | 36 |
| | 4 | 54 | 60 | 20 |
| | 4 | 18 | 50 | 20 |
| (9) SYNERGY | | | | |

**Tab. 139: (1)** CYPES - **(2)** 21 DAT - **(3)** A-1 - **(4)** B7-7

| | (5) | (6) | (7) | (8) |
|---|---|---|---|---|
| (3) | 4 | - | 80 | - |
| (4) | - | 18 | 40 | - |
| (3)+(4) | 4 | 18 | 98 | 88 |
| (9) SYNERGY | | | | |

**Tab. 140: (1)** TRZAS - **(2)** 10 DAT - **(3)** A-1 - **(4)** B7-16

| | (5) | (6) | (7) | (8) |
|---|---|---|---|---|
| (3) | 12 | - | 0 | - |
| | 4 | - | 0 | - |
| (4) | - | 2 | 40 | - |
| (3)+(4) | 12 | 2 | 70 | 40 |
| | 4 | 2 | 60 | 40 |
| (9) SYNERGY | | | | |

**Tab. 141: (1)** VIOTR - **(2)** 10 DAT - **(3)** A-1 - **(4)** B7-16

| | (5) | (6) | (7) | (8) |
|---|---|---|---|---|
| (3) | 4 | - | 20 | - |
| (4) | - | 2 | 70 | - |
| (3)+(4) | 4 | 2 | 90 | 76 |
| (9) SYNERGY | | | | |

**Tab. 142: (1)** ZEAMX - **(2)** 10 DAT - **(3)** A-1 - **(4)** B7-16

| | (5) | (6) | (7) | (8) |
|---|---|---|---|---|
| (3) | 4 | - | 0 | - |
| (4) | - | 6 | 20 | - |
| (3)+(4) | 4 | 6 | 30 | 20 |
| (9) SYNERGY | | | | |

**Tab. 143: (1)** ZEAMX - **(2)** 10 DAT - **(3)** A-1 - **(4)** B7-16

| | **(5)** | **(6)** | **(7)** | **(8)** |
|---|---|---|---|---|
| **(3)** | 12 | - | 0 | - |
| **(4)** | - | 6 | 20 | - |
| | - | 2 | 30 | - |
| **(3)+(4)** | 12 | 6 | 40 | 20 |
| | 12 | 2 | 50 | 30 |
| **(9) SYNERGY** | | | | |

**Tab. 144: (1)** ORYSA - **(2)** 10 DAT - **(3)** A-1 - **(4)** B7-16

| | **(5)** | **(6)** | **(7)** | **(8)** |
|---|---|---|---|---|
| **(3)** | 12 | - | 10 | - |
| | 4 | - | 10 | - |
| **(4)** | - | 2 | 90 | - |
| **(3)+(4)** | 12 | 2 | 70 | 91 |
| | 4 | 2 | 80 | 91 |
| **(9)** SAFENING | | | | |

**Tab. 145:** (1) TRZAS - **(2)** 21 DAT - **(3)** A-1 - **(4)** B7-16

| | **(5)** | **(6)** | **(7)** | **(8)** |
|---|---|---|---|---|
| **(3)** | 4 | - | 0 | - |
| **(4)** | - | 6 | 60 | - |
| | - | 2 | 20 | - |
| **(3)+(4)** | 4 | 6 | 70 | 60 |
| | 4 | 2 | 50 | 20 |
| **(9)** SYNERGY | | | | |

**Tab. 146**: **(1)** TRZAS - **(2)** 21 DAT - **(3)** A-1 - **(4)** B7-16

| | **(5)** | **(6)** | **(7)** | **(8)** |
|---|---|---|---|---|
| **(3)** | 12 | - | 0 | - |
| **(4)** | - | 2 | 20 | - |
| **(3)+(4)** | 12 | 2 | 65 | 20 |
| **(9)** SYNERGY | | | | |

**Tab. 147: (1)** VIOTR - **(2)** 21 DAT - **(3)** A-1 - **(4)** B7-16

| | **(5)** | **(6)** | **(7)** | **(8)** |
|---|---|---|---|---|
| **(3)** | 4 | - | 0 | - |
| **(4)** | - | 2 | 90 | - |

(fortgesetzt)

| | (5) | (6) | (7) | (8) |
|---|---|---|---|---|
| **(3)+(4)** | 4 | 2 | 100 | 90 |
| **(9)** SYNERGY | | | | |

**Tab. 148: (1)** AVEFA - **(2)** 21 DAT - **(3)** A-1 - **(4)** B7-16

| | (5) | (6) | (7) | (8) |
|---|---|---|---|---|
| **(3)** | 12 | - | 30 | - |
| | 4 | - | 10 | - |
| **(4)** | - | 2 | 10 | - |
| **(3)+(4)** | 12 | 2 | 60 | 37 |
| | 4 | 2 | 50 | 19 |
| **(9)** SYNERGY | | | | |

**Tab. 149: (1)** ZEAMX - **(2)** 21 DAT - **(3)** A-1 - **(4)** B7-16

| | (5) | (6) | (7) | (8) |
|---|---|---|---|---|
| **(3)** | 12 | - | 0 | - |
| **(4)** | - | 2 | 0 | - |
| **(3)+(4)** | 12 | 2 | 20 | 0 |
| **(9)** SYNERGY | | | | |

**Tab. 150: (1)** ORYSA - **(2)** 21 DAT - **(3)** A-1 - **(4)** B7-16

| | (5) | (6) | (7) | (8) |
|---|---|---|---|---|
| **(3)** | 12 | - | 10 | - |
| **(4)** | - | 2 | 70 | - |
| **(3)+(4)** | 12 | 2 | 50 | 73 |
| **(9)** SAFENING | | | | |

**Tab. 151: (1)** TRZAS - **(2)** 10 DAT - **(3)** A-1 - **(4)** B7-17

| | (5) | (6) | (7) | (8) |
|---|---|---|---|---|
| **(3)** | 12 | - | 0 | - |
| | 4 | - | 0 | - |
| **(4)** | - | 6 | 60 | - |
| | - | 2 | 40 | - |

(fortgesetzt)

| | **(5)** | **(6)** | **(7)** | **(8)** |
|---|---|---|---|---|
| **(3)+(4)** | 12 | 6 | 70 | 60 |
| | 12 | 2 | 70 | 40 |
| | 4 | 6 | 80 | 60 |
| | 4 | 2 | 70 | 40 |
| **(9)** SYNERGY | | | | |

**Tab. 152: (1)** ZEAMX - **(2)** 10 DAT - **(3)** A-1 - **(4)** B7-17

| | **(5)** | **(6)** | **(7)** | **(8)** |
|---|---|---|---|---|
| **(3)** | 4 | - | 0 | - |
| **(4)** | - | 6 | 40 | - |
| **(3)+(4)** | 4 | 6 | 50 | 40 |
| **(9)** SYNERGY | | | | |

**Tab. 153: (1)** ORYSA - **(2)** 10 DAT - **(3)** A-1 - **(4)** B7-17

| | **(5)** | **(6)** | **(7)** | **(8)** |
|---|---|---|---|---|
| **(3)** | 12 | - | 10 | - |
| | 4 | - | 10 | - |
| **(4)** | - | 6 | 90 | - |
| **(3)+(4)** | 12 | 6 | 80 | 91 |
| | 4 | 6 | 80 | 91 |
| **(9)** SAFENING | | | | |

**Tab. 154: (1)** TRZAS - **(2)** 21 DAT - **(3)** A-1 - (4) B7-17

| | **(5)** | **(6)** | **(7)** | **(8)** |
|---|---|---|---|---|
| **(3)** | 4 | - | 0 | - |
| **(4)** | - | 6 | 70 | - |
| | - | 2 | 20 | - |
| **(3)+(4)** | 4 | 6 | 90 | 70 |
| | 4 | 2 | 50 | 20 |
| **(9)** SYNERGY | | | | |

**Tab. 155: (1)** TRZAS - **(2)** 21 DAT - **(3)** A-1 - **(4)** B7-17

| | **(5)** | **(6)** | **(7)** | **(8)** |
|---|---|---|---|---|
| **(3)** | 12 | - | 0 | - |
| **(4)** | - | 2 | 20 | - |

(fortgesetzt)

| | (5) | (6) | (7) | (8) |
|---|---|---|---|---|
| **(3)+(4)** | 12 | 2 | 60 | 20 |
| **(9) SYNERGY** | | | | |

**Tab. 156: (1)** AVEFA - **(2)** 21 DAT - **(3)** A-1 - **(4)** B7-17

| | (5) | (6) | (7) | (8) |
|---|---|---|---|---|
| **(3)** | 4 | - | 10 | - |
| **(4)** | - | 6 | 70 | - |
| | - | 2 | 20 | - |
| **(3)+(4)** | 4 | 6 | 85 | 73 |
| | 4 | 2 | 65 | 28 |
| **(9)** SYNERGY | | | | |

**Tab. 157: (1)** AVEFA - **(2)** 21 DAT - **(3)** A-1 - **(4)** B7-17

| | (5) | (6) | (7) | (8) |
|---|---|---|---|---|
| **(3)** | 12 | - | 30 | - |
| **(4)** | - | 2 | 20 | - |
| **(3)+(4)** | 12 | 2 | 65 | 44 |
| **(9)** SYNERGY | | | | |

**Tab. 158: (1)** POLCO - **(2)** 21 DAT - **(3)** A-1 - **(4)** B7-17

| | (5) | (6) | (7) | (8) |
|---|---|---|---|---|
| **(3)** | 4 | - | 75 | - |
| **(4)** | - | 2 | 40 | - |
| **(3)+(4)** | 4 | 2 | 95 | 85 |
| **(9) SYNERGY** | | | | |

**Tab. 159: (1)** POLCO - **(2)** 21 DAT - **(3)** A-1 - **(4)** B7-17

| | (5) | (6) | (7) | (8) |
|---|---|---|---|---|
| **(3)** | 12 | - | 70 | - |
| **(4)** | - | 6 | 50 | - |
| | - | 2 | 40 | - |
| **(3)+(4)** | 12 | 6 | 95 | 85 |
| | 12 | 2 | 95 | 82 |
| **(9)** SYNERGY | | | | |

**Tab. 160: (1)** ORYSA - **(2)** 10 DAT - **(3)** A-1 - **(4)** B8-3

| | (5) | (6) | (7) | (8) |
|---|---|---|---|---|
| **(3)** | 12 | - | 10 | - |
| | 4 | - | 10 | - |
| **(4)** | - | 2 | 70 | - |
| | - | 0,7 | 50 | - |
| **(3)+(4)** | 12 | 2 | 50 | 73 |
| | 12 | 0,7 | 30 | 55 |
| | 4 | 2 | 30 | 73 |
| | 4 | 0,7 | 30 | 55 |
| **(9)** SAFENING | | | | |

**Tab. 161: (1)** TRZAS - **(2)** 21 DAT - **(3)** A-1 - **(4)** B8-3

| | (5) | (6) | (7) | (8) |
|---|---|---|---|---|
| **(3)** | 12 | - | 0 | - |
| | 4 | - | 0 | - |
| **(4)** | - | 2 | 30 | - |
| **(3)+(4)** | 12 | 2 | 40 | 30 |
| | 4 | 2 | 40 | 30 |
| **(9)** SYNERGY | | | | |

**Tab. 162: (1)** VERPE - **(2)** 21 DAT - **(3)** A-1 - **(4)** B8-3

| | (5) | (6) | (7) | (8) |
|---|---|---|---|---|
| **(3)** | 12 | - | 40 | - |
| | 4 | - | 30 | - |
| **(4)** | - | 2 | 40 | - |
| **(3)+(4)** | 12 | 2 | 75 | 64 |
| | 4 | 2 | 70 | 58 |
| **(9)** SYNERGY | | | | |

**Tab. 163: (1)** AVEFA - **(2)** 21 DAT - **(3)** A-1 - **(4)** B8-3

| | (5) | (6) | (7) | (8) |
|---|---|---|---|---|
| **(3)** | 12 | - | 30 | - |
| | 4 | - | 10 | - |
| **(4)** | - | 0,7 | 50 | - |
| **(3)+(4)** | 12 | 0,7 | 75 | 65 |
| | 4 | 0,7 | 70 | 55 |
| **(9)** SYNERGY | | | | |

**Tab. 164: (1)** ZEAMX - **(2)** 21 DAT - **(3)** A-1 - **(4)** B8-3

| | **(5)** | **(6)** | **(7)** | **(8)** |
|---|---|---|---|---|
| **(3)** | 12 | - | 0 | - |
| **(4)** | - | 2 | 20 | - |
| **(3)+(4)** | 12 | 2 | 40 | 20 |
| **(9)** SYNERGY | | | | |

**Tab. 165: (1)** CYPES - **(2)** 21 DAT - **(3)** A-1 - **(4)** B8-3

| | **(5)** | **(6)** | **(7)** | **(8)** |
|---|---|---|---|---|
| **(3)** | 12 | - | 80 | - |
| | 4 | - | 80 | - |
| **(4)** | - | 0,7 | 0 | - |
| **(3)+(4)** | 12 | 0,7 | 95 | 80 |
| | 4 | 0,7 | 90 | 80 |
| **(9)** SYNERGY | | | | |

**Tab. 166: (1)** ORYSA - **(2)** 21 DAT - **(3)** A-1 - **(4)** B8-3

| | **(5)** | **(6)** | **(7)** | **(8)** |
|---|---|---|---|---|
| **(3)** | 4 | - | 0 | - |
| **(4)** | - | 2 | 40 | - |
| **(3)+(4)** | 4 | 2 | 30 | 40 |
| **(9)** SAFENING | | | | |

**Tab. 167: (1)** TRZAS - **(2)** 10 DAT - **(3)** A-1 - **(4)** B9-6

| | **(5)** | **(6)** | **(7)** | **(8)** |
|---|---|---|---|---|
| **(3)** | 12 | - | 0 | - |
| **(4)** | - | 15 | 10 | - |
| **(3)+(4)** | 12 | 15 | 20 | 10 |
| **(9)** SYNERGY | | | | |

**Tab. 168: (1)** ZEAMX - **(2)** 10 DAT - **(3)** A-1 - **(4)** B9-6

| | **(5)** | **(6)** | **(7)** | **(8)** |
|---|---|---|---|---|
| **(3)** | 4 | - | 0 | - |
| **(4)** | - | 15 | 30 | - |
| **(3)+(4)** | 4 | 15 | 50 | 30 |
| **(9)** SYNERGY | | | | |

**Tab. 169: (1)** ZEAMX - **(2)** 10 DAT - **(3)** A-1 - **(4)** B9-6

| | **(5)** | **(6)** | **(7)** | **(8)** |
|---|---|---|---|---|
| **(3)** | 12 | - | 0 | - |
| **(4)** | - | 5 | 0 | - |
| **(3)+(4)** | 12 | 5 | 30 | 0 |
| **(9)** SYNERGY | | | | |

**Tab. 170: (1)** ORYSA - **(2)** 10 DAT - **(3)** A-1 - **(4)** B9-6

| | **(5)** | **(6)** | **(7)** | **(8)** |
|---|---|---|---|---|
| **(3)** | 4 | - | 10 | - |
| **(4)** | - | 15 | 20 | - |
| **(3)+(4)** | 4 | 15 | 10 | 28 |
| **(9)** SAFENING | | | | |

**Tab. 171: (1)** TRZAS - **(2)** 21 DAT - **(3)** A-1 - **(4)** B9-6

| | **(5)** | **(6)** | **(7)** | **(8)** |
|---|---|---|---|---|
| **(3)** | 12 | - | 0 | - |
| **(4)** | - | 15 | 0 | - |
| **(3)+(4)** | 12 | 15 | 10 | 0 |
| **(9)** SYNERGY | | | | |

**Tab. 172: (1)** LOLMU - **(2)** 21 DAT - **(3)** A-1 - **(4)** B9-6

| | **(5)** | **(6)** | **(7)** | **(8)** |
|---|---|---|---|---|
| **(3)** | 12 | - | 10 | - |
| | 4 | - | 0 | - |
| **(4)** | - | 5 | 20 | - |
| **(3)+(4)** | 12 | 5 | 50 | 28 |
| | 4 | 5 | 40 | 20 |
| **(9)** SYNERGY | | | | |

**Tab. 173: (1)** PHBPU - **(2)** 21 DAT - **(3)** A-1 - **(4)** B9-6

| | **(5)** | **(6)** | **(7)** | **(8)** |
|---|---|---|---|---|
| **(3)** | 12 | - | 65 | - |
| **(4)** | - | 15 | 30 | - |
| | - | 5 | 10 | - |

(fortgesetzt)

| | (5) | (6) | (7) | (8) |
|---|---|---|---|---|
| **(3)+(4)** | 12 | 15 | 90 | 76 |
| | 12 | 5 | 90 | 69 |
| **(9)** SYNERGY | | | | |

**Tab. 174: (1)** ORYSA - **(2)** 21 DAT - **(3)** A-1 - **(4)** B9-6

| | (5) | (6) | (7) | (8) |
|---|---|---|---|---|
| **(3)** | 12 | - | 10 | - |
| | 4 | - | 0 | - |
| **(4)** | - | 15 | 10 | - |
| | - | 5 | 10 | - |
| **(3)+(4)** | 12 | 15 | 0 | 19 |
| | 12 | 5 | 0 | 19 |
| | 4 | 15 | 0 | 10 |
| | 4 | 5 | 0 | 10 |
| **(9)** SAFENING | | | | |

**Patentansprüche**

1. Herbizid-Kombination enthaltend Komponenten (A) und (B), wobei

(A) bedeutet die Verbindungen oder deren Salze beschrieben durch die Formel (A-1):

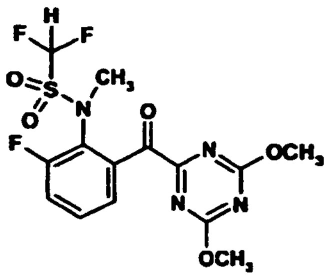

(A1)

und

(B) bedeutet ein oder mehrere Herbizide aus der Gruppe der (Sulfon)Amide bestehend aus:

(B3-1) Diflufenican;
(B3-3) Flufenacet;
(B3-4) Mefenacet;
(B3-8) Propanil;
(B4-3) Butachlor;
(B4-8) Pretilachlor;
(B6-7) Molinate;
(B7-6) Cinosulfuron;
(B7-7) Cyclosulfamuron;
(B7-8) Ethametsulfuron-methyl;
(B7-16) Iodosulfuron-methyl-natrium;

(B7-17) Mesosulfuron-methyl;
(B7-20) Orthosulfamuron;
(B8-3) Thiencarbazone-methyl;
(B9-6) Penoxsulam;
(B9-7) Pyroxsulam.

2. Herbizid-Kombination nach Anspruch 1, enthaltend als Komponente (B) eine oder mehrere der Verbindungen aus der Untergruppe der Anilide, bestehend aus:

(B3-1) Diflufenican;
(B3-3) Flufenacet;
(B3-4) Mefenacet;
(B3-8) Propanil.

3. Herbizid-Kombination nach Anspruch 1, enthaltend als Komponente (B) eine oder mehrere der Verbindungen aus der Untergruppe der Anilide, bestehend aus:

(B3-1) Diflufenican;
(B3-4) Mefenacet;
(B3-8) Propanil.

4. Herbizid-Kombination nach Anspruch 1, enthaltend als Komponente (B) eine oder mehrere der Verbindungen aus der Untergruppe der Chloracetanilide, bestehend aus:

(B4-3) Butachlor;
(B4-8) Pretilachlor.

5. Herbizid-Kombination nach Anspruch 1, enthaltend als Komponente (B) aus der Untergruppe der Thiocarbamate die Verbindung (B6-7) Molinate.

6. Herbizid-Kombination nach Anspruch 1, enthaltend als Komponente (B) eine oder mehrere der Verbindungen aus der Untergruppe der Sulfonylharnstoffe, bestehend aus:

(B7-6) Cinosulfuron;
(B7-7) Cyclosulfamuron;
(B7-8) Ethametsulfuron-methyl;
(B7-16) Iodosulfuron-methyl-natrium;
(B7-17) Mesosulfuron-methyl;
(B7-20) Orthosulfamuron.

7. Herbizid-Kombination nach Anspruch 1, enthaltend als Komponente (B) eine oder mehrere der Verbindungen aus der Untergruppe der Sulfonylharnstoffe, bestehend aus:

(B7-6) Cinosulfuron;
(B7-7) Cyclosulfamuron;
(B7-16) Iodosulfuron-methyl-natrium;
(B7-17) Mesosulfuron-methyl.

8. Herbizid-Kombination nach Anspruch 1, enthaltend als Komponente (B) aus der Untergruppe der Sulfonylaminocarbonyltriazolinone die Verbindung (B8-3) Thiencarbazone-methyl.

9. Herbizid-Kombination nach Anspruch 1, enthaltend als Komponente (B) eine oder mehrere der Verbindungen aus der Untergruppe der Triazolopyrimidine, bestehend aus:

(B9-6) Penoxsulam;
(B9-7) Pyroxsulam.

10. Herbizid-Kombination nach Anspruch 1, enthaltend als Komponente (B) aus der Untergruppe der Triazolopyrimidine

die Verbindung (B9-6) Penoxsulam.

**11.** Herbizid-Kombination nach einem oder mehreren der Ansprüche 1 bis 10, wobei das Gewichtsverhältnis (A) : (B) der Komponenten (A) und (B) im Allgemeinen im Bereich von 1 : 7000 bis 5000 : 1, vorzugsweise 1 : 5000 bis 2500 : 1, insbesondere 1 : 3000 bis 1000 : 1, liegt.

**12.** Herbizid-Kombination nach einem oder mehreren der Ansprüche 1 bis 11, enthaltend einen wirksamen Gehalt an Komponenten (A) und (B) und/oder zusätzlich eine oder mehrere weitere Komponenten aus der Gruppe agrochemischer Wirkstoffe anderer Art, im Pflanzenschutz übliche Zusatzstoffe und Formulierungshilfsmittel.

**13.** Verfahren zur Bekämpfung von unerwünschtem Pflanzenwuchs, worin die Komponenten (A) und (B) der Herbizid-Kombination, definiert gemäß einem oder mehreren der Ansprüche 1 bis 12, gemeinsam oder getrennt appliziert werden.

**14.** Verfahren nach Anspruch 13 zur Bekämpfung von unerwünschtem Pflanzenwuchs in Pflanzenkulturen , vorzugsweise Weizen (Hart- und Weichweizen), Mais, Soja, Zuckerrübe, Zuckerrohr Baumwolle, Reis, Bohnen, Flachs, Gerste, Hafer, Roggen, Triticale, Raps, Kartoffel, Hirse (Sorghum), oder in Weideland, in Grün-/Rasenflächen, in Obstanbauanlagen, oder auf Nicht-Kulturflächen.

**15.** Verfahren nach Anspruch 14, worin die Pflanzenkulturen Reiskulturen sind.

**16.** Verwendung der nach einem oder mehreren der Ansprüche 1 bis 12 definierten Herbizid-Kombination zur Bekämpfung von unerwünschtem Pflanzenwuchs.

**Claims**

**1.** Herbicide combination comprising components (A) and (B), where

(A) denotes the compounds or salts thereof described by the formula (A-1):

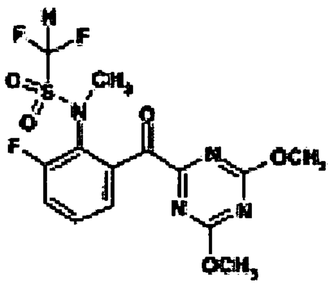

(A1)

and

(B) denotes one or more herbicides from the group of the (sulfon)amides consisting of:

(B3-1) diflufenican;
(B3-3) flufenacet;
(B3-4) mefenacet;
(B3-8) propanil;
(B4-3) butachlor;
(B4-8) pretilachlor;
(B6-7) molinate;
(B7-6) cinosulfuron;
(B7-7) cyclosulfamuron;
(B7-8) ethametsulfuron-methyl;
(B7-16) iodosulfuron-methyl-sodium;
(B7-17) mesosulfuron-methyl;
(B7-20) orthosulfamuron;

(B8-3) thiencarbazone-methyl;
(B9-6) penoxsulam;
(B9-7) pyroxsulam.

**2.** Herbicide combination according to Claim 1, comprising as component (B) one or more of the compounds from the subgroup of the anilides consisting of:

(B3-1) diflufenican;
(B3-3) flufenacet;
(B3-4) mefenacet;
(B3-8) propanil.

**3.** Herbicide combination according to Claim 1, comprising as component (B) one or more of the compounds from the subgroup of the anilides consisting of:

(B3-1) diflufenican;
(B3-4) mefenacet;
(B3-8) propanil.

**4.** Herbicide combination according to Claim 1, comprising as component (B) one or more of the compounds from the subgroup of the chloroacetanilides consisting of:

(B4-3) butachlor;
(B4-8) pretilachlor.

**5.** Herbicide combination according to Claim 1, comprising as component (B), from the subgroup of the thiocarbamates, the compound (B6-7) molinate.

**6.** Herbicide combination according to Claim 1, comprising as component (B) one or more of the compounds from the subgroup of the sulfonylureas consisting of:

(B7-6) cinosulfuron;
(B7-7) cyclosulfamuron;
(B7-8) ethametsulfuron-methyl;
(B7-16) iodosulfuron-methyl-sodium;
(B7-17) mesosulfuron-methyl;
(B7-20) orthosulfamuron.

**7.** Herbicide combination according to Claim 1, comprising as component (B) one or more of the compounds from the subgroup of the sulfonylureas consisting of:

(B7-6) cinosulfuron;
(B7-7) cyclosulfamuron;
(B7-16) iodosulfuron-methyl-sodium;
(B7-17) mesosulfuron-methyl.

**8.** Herbicide combination according to Claim 1, comprising as component (B), from the subgroup of the sulfonylaminocarbonyl-triazolinones, the compound (B8-3) thiencarbazone-methyl.

**9.** Herbicide combination according to Claim 1, comprising as component (B) one or more of the compounds from the subgroup of the triazolopyrimidines consisting of:

(B9-6) penoxsulam;
(B9-7) pyroxsulam.

**10.** Herbicide combination according to Claim 1, comprising as component (B), from the subgroup of the triazolopyrimidines, the compound (B9-6) penoxsulam.

**11.** Herbicide combination according to one or more of Claims 1 to 10, where the weight ratio (A):(B) of the components (A) and (B) is generally in the range of from 1:7000 to 5000:1, preferably 1:5000 to 2500:1, in particular 1:3000 to 1000:1.

**12.** Herbicide combination according to one or more of Claims 1 to 11, comprising an effective amount of components (A) and (B) and/or additionally one or more further components from the group of agrochemically active compounds of a different type, formulation auxiliaries and additives customary in crop protection.

**13.** Method for controlling unwanted vegetation, wherein the components (A) and (B) of the herbicide combination, defined according to one or more of Claims 1 to 12, are applied jointly or separately.

**14.** Method according to Claim 13 for controlling unwanted vegetation in plant crops, preferably wheat (durum wheat and common wheat), corn, soybeans, sugar beet, sugar cane, cotton, rice, beans, flax, barley, oats, rye, triticale, oilseed rape, potatoes, millet (sorghum), or in pasture grass, greens/lawns, in fruit plantations or on non-crop areas.

**15.** Method according to Claim 14, wherein the plant crops are rice crops.

**16.** Use of the herbicide combination defined in one or more of Claims 1 to 12 for controlling unwanted vegetation.

**Revendications**

**1.** Association d'herbicides contenant des composants (A) et (B),

(A) signifiant les composés ou leurs sels décrits par la formule (A-1) :

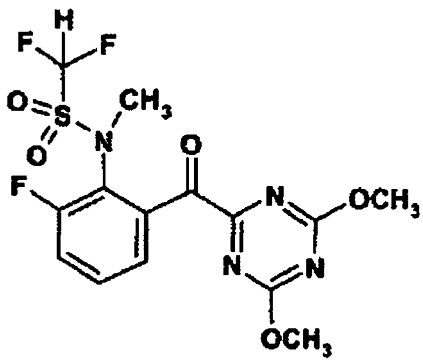

(A1)

Et
(B) signifiant un ou plusieurs herbicides choisis dans le groupe des (sulfon)amides consistant en :

(B3-1) diflufénican ;
(B3-3) flufénacet ;
(B3-4) méfénacet ;
(B3-8) propanil ;
(B4-3) butachlor,
(B4-8) prétilachlor ;
(B6-7) molinate ;
(B7-6) cinosulfuron ;
(B7-7) cyclosulfamuron ;
(B7-8) éthametsulfuron-méthyle ;
(B7-16) iodosulfuron-méthyl-sodium ;
(B7-17) mésosulfuron-méthyle ;
(B7-20) orthosulfamuron ;
(B8-3) thiencarbazone-méthyle ;
(B9-6) pénoxsulame ;
(B9-7) pyroxsulame.

2. Association d'herbicides selon la revendication 1, contenant comme composant (B) un ou plusieurs des composés choisis dans le sous-groupe des anilides, consistant en :

(B3-1) diflufénican ;
(B3-3) flufénacet ;
(B3-4) méfénacet ;
(B3-8) propanil.

3. Association d'herbicides selon la revendication 1, contenant comme composant (B) un ou plusieurs des composés choisis dans le sous-groupe des anilides, consistant en :

(B3-1) diflufénican ;
(B3-4) méfénacet ;
(B3-8) propanil.

4. Association d'herbicides selon la revendication 1, contenant comme composant (B) un ou plusieurs des composés choisis dans le sous-groupe des chloracétanilides, consistant en :

(B4-3) butachlor ;
(B4-8) prétilachlor.

5. Association d'herbicides selon la revendication 1, contenant comme composant (B) choisi dans le sous-groupe des thiocarbamates le composé (B6-7) molinate.

6. Association d'herbicides selon la revendication 1, contenant comme composant (B) un ou plusieurs des composés choisis dans le sous-groupe des sulfonylurées, consistant en :

(B7-6) cinosulfuron ;
(B7-7) cyclosulfamuron ;
(B7-8) éthametsulfuron-méthyle ;
(B7-16) iodosulfuron-méthyl-sodium ;
(B7-17) mésosulfuron-méthyle ;
(B7-20) orthosulfamuron.

7. Association d'herbicides selon la revendication 1, contenant comme composant (B) un ou plusieurs des composés choisis dans le sous-groupe des sulfonylurées, consistant en :

(B7-6) cinosulfuron ;
(B7-7) cyclosulfamuron ;
(B7-16) iodosulfuron-méthyl-sodium ;
(B7-17) mésosulfuron-méthyle.

8. Association d'herbicides selon la revendication 1, contenant comme composant (B) choisi dans le sous-groupe des sulfonylaminocarbonyl-triazolinones le composé (B8-3) thiencarbazone-méthyle.

9. Association d'herbicides selon la revendication 1, contenant comme composant (B) un ou plusieurs des composés choisis dans le sous-groupe des triazolopyrimidines, consistant en :

(B9-6) pénoxsulame ;
(B9-7) pyroxsulame.

10. Association d'herbicides selon la revendication 1, contenant comme composant (B) choisi dans le sous-groupe des triazolopyrimidines le composé (B9-6) pénoxsulame.

11. Association d'herbicides selon une ou plusieurs des revendications 1 à 10, dans laquelle le rapport pondéral (A) : (B) des composants (A) et (B) se situe en général dans la plage allant de 1 : 7000 à 5000 : 1, de préférence de 1 : 5000 à 2500 : 1, en particulier de 1 : 3000 à 1000 : 1.

**12.** Association d'herbicides selon une ou plusieurs des revendications 1 à 11, ayant une teneur efficace en composants (A) et (B) et/ou contenant en outre un ou plusieurs composants choisis dans le groupe des substances actives agrochimiques d'autre type, des additifs usuels dans la protection des plantes et des adjuvants de formulation.

**13.** Procédé pour la lutte contre la croissance indésirable de plantes, dans lequel on applique ensemble ou séparément les composants (A) et (B) de l'association d'herbicides, définie selon une ou plusieurs des revendications 1 à 12.

**14.** Procédé selon la revendication 13 pour la lutte contre la croissance indésirable de plantes dans des cultures de plantes, de préférence de blé (blé dur et blé tendre), maïs, soja, betterave sucrière, canne à sucre, coton, riz, haricot, lin, orge, avoine, seigle, triticale, colza, pomme de terre, millet (sorgho), ou dans des pâturages, dans des pelouses/espaces verts, dans des aires de culture fruitière, ou sur des aires non cultivées.

**15.** Procédé selon la revendication 14, dans lequel les cultures de plantes sont des cultures de riz.

**16.** Utilisation de l'association d'herbicides définie selon une ou plusieurs des revendications 1 à 12, pour la lutte contre la croissance indésirable de plantes.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9309099 A2
- WO 9641799 A1
- WO 00006553 A1
- WO 2005096818 A1
- WO 2007031208 A2
- WO 2006008159 A1
- JP 2007213330 A
- WO 2007079965 A2
- EP 2008000870 W
- EP 239414 A
- US 4288244 A
- DE 3303388
- US 5457085 A
- US 3120434 A
- US 3480671 A
- EP 206251 A
- EP 205271 A
- US 2556664 A
- US 3534098 A
- EP 53011 A
- US 04385927 A
- EP 348737 A
- DE 2822155
- US 3894078 A
- GB 869169 A
- EP 447004 A
- DE 1039779
- HU 176582
- US 3442945 A
- DE 2305495
- DE 2648008
- DE 2328340
- DE 1014380
- HU 53483
- US 4802907 A
- GB 1040541 A
- US 2903478 A
- US 3177061 A
- US 2695225 A
- DE 1567151
- GB 574995 A
- DE 1031571
- US 3175897 A
- JP 1098331 A
- US 2913327 A
- WO 8300329 A
- JP 80127302 B
- DE 1300947
- DE 2135768
- US 3175887 A
- US 3836524 A
- JP 85067463 B
- US 3582314 A
- US 53330821 B
- EP 131258 A
- US 4746353 A
- US 4420325 A
- US 4394506 A
- US 4127405 A
- US 4479821 A
- US 5009699 A
- EP 136061 A
- EP 324569 A
- EP 184385 A
- WO 2002030921 A
- WO 09215576 A
- WO 09529899 A
- US 4668277 A
- EP 305939 A
- WO 09641537 A
- WO 09510507 A
- EP 7677 A
- CN 01080116
- US 4789393 A
- EP 971902 A
- US 5209771 A
- EP 84020 A
- EP 120814 A
- EP 87780 A
- WO 08804297 A
- EP 477808 A
- EP 30142 A
- EP 44808 A
- EP 202830 A
- WO 09741112 A
- EP 336587 A
- DE 4038430
- CN 01323789
- EP 189069 A
- WO 2005103044 A
- WO 2003061388 A
- EP 507171 A
- WO 2001005788 A
- US 5163995 A
- EP 142152 A
- US 5828924 A
- WO 2002036595 A
- EP 0221044 A

- EP 0131624 A
- WO 9211376 A
- WO 9214827 A
- WO 9119806 A
- EP 0257993 A
- US 5013659 A
- EP 0142924 A
- EP 0193259 A
- WO 9113972 A
- EP 0476555 A
- EP 0048436 A
- EP 0336151 A
- US 4400196 A
- EP 0502014 A


**In der Beschreibung aufgeführte Nicht-Patentliteratur**


- The Pesticide Manual. 2006
- The e-Pesticide Manual. 2006
- *Weed Research,* 1986, vol. 26, 441-445
- The Pesticide Manual. 2003
- THE PESTICIDE MANUAL. 2006
- The e-Pesticide Manual. British Crop Protection Council, 2006
- **Sambrook et al.** Molecular Cloning, A Laboratory Manual. Cold Spring Harbor Laboratory Press, 1989
- **Winnacker.** Gene und Klone. VCH, 1996
- **Christou.** *Trends in Plant Science,* 1996, vol. 1, 423-431
- **Braun et al.** *EMBO J.,* 1992, vol. 11, 3219-3227
- **Wolter et al.** *Proc. Natl. Acad. Sci. USA,* 1988, vol. 85, 846-850
- **Sonnewald et al.** *Plant J.,* 1991, vol. 1, 95-106
- Factors Affecting Herbicidal Activity and Selectivity. *Proc. EWRS Symp.,* 1988, 227-232
- Römpp Chemie Lexikon. Thieme Verlag, vol. 2, 1343
- **S.R. Colby.** *Weeds,* 1967, vol. 15, 20-22